# EUROPEAN PATENT APPLICATION

(11) **EP 1 901 558 A1**
(43) Date of publication of application: **19.03.2008**
(21) Application number: 06756854.3
(22) Date of filing: 31.05.2006
(51) Int. Cl.: H04N 7/173, H04H 1/00

(54) **MULTIMEDIA CONTENT BIDIRECTIONAL SERVICE SYSTEM**

(30) Priority: 31.05.2005 JP 2005160712; 22.09.2005 JP 2005275130
(71) Applicant: Sharp Kabushiki Kaisha, Osaka-shi, Osaka 545-8522 (JP)
(72) Inventor: HAGAWA, Toshihide, Chiba-shi, Chiba 266-0011 (JP); UEDA, Toru, Kyoto 619-0215 (JP); IWAI, Toshiyuki, JP (JP)
(74) Representative: Müller, Frithjof E.
(86) International application number: PCT/JP2006/310934
(87) International publication number: WO 2007/000870

(57) **Abstract**

In an interactive service system (70), a service provider has an AV content creating/transmitting device (72) for transmitting AV content and an AV content related service providing device (75) for receiving a message, and a service requestor has an AV content reproducing device (74) for reproducing the AV content received from the AV content creating/transmitting device (72) and then creating the message in accordance with sub-content of the AV content to transmit the message. The AV content creating/transmitting device (72) broadcasts AV data of the AV content via a relay station (13), while transmitting sub-content of the AV content via a network (16).

## Description

### TECHNICAL FIELD

The present invention relates to an interactive service system in which multimedia content including content and sub-content attached to the content is transmitted from a service provider to a service requestor and a message with respect to the multimedia content is transmitted from the service requestor to the service provider, a method for controlling the interactive service system, a multimedia content transmitting device, a method for controlling the multimedia content transmitting device, a multimedia content receiving device, a method for controlling the multimedia content receiving device, a sub-content receiving device, a method for controlling the sub-content receiving device, a program for controlling the interactive service system, a program for controlling the multimedia content transmitting device, a program for controlling the multimedia content receiving device, a program for controlling the sub-content receiving device, and a recording medium recording the program.

### BACKGROUND ART

Currently, TV (television) broadcasting has been shifting from analog broadcasting to digital broadcasting. Characteristics of the digital broadcasting are realization of many channels, high image quality, and high sound quality. In addition to these, realization of data broadcasting is also one of the characteristics of the digital broadcasting.

In the data broadcasting, a broadcasting company utilizes airwaves of satellite TV broadcasting or ground wave TV broadcasting so as to deliver data, such as a character, a program, or the like, to a large number of unspecified terminals (TV receivers). By utilizing (i) a function of the data broadcasting of the broadcasting company and (ii) a information input function and communication function of the terminal, it is possible to realize an interactive service which allows a viewer to takes some actions with respect to the TV broadcasting.

According to a conventional interactive service, AV content including AV (audio visual) data and sub-content attached to the AV data is transmitted to the terminal. The sub-content includes BML data written in BML (Broadcast Markup Language). The terminal interprets and executes the data to lay out and display broadcast content and information attached to the broadcast content. Moreover, an interaction with respect to the input from the terminal is executed by an ECMA script included in the BML data. Then, data including content of the input is transmitted to, for example, a BML response server through a telephone line, the Internet, or the like.

In a two-way service aid system described in Document 1, a broadcasting company broadcasts data broadcasting program content including a two-way service-use service scene, a service scene code (SSC) for identifying the service scene related to the service scene, and a service type corresponding to the SSC. A receiver of a viewer receives the data broadcasting program content broadcasted by the broadcasting company, and then transmits response data, including the SSC and the service type, to a response server. The response server refers to a memory to specify a server module corresponding to the service type in the response data received from the receiver, and then executes a process corresponding to the specified server module.

Note that, in the present application, data transmitted from a service requestor to a service provider is referred to as message. A "message" can be an e-mail or a request made on WWW (World Wide Web).
[Patent document 1] Japanese Unexamined Patent Publication No. 171508/2002 (Tokukai 2002-171508; Published on June 14, 2002)
[Patent document 2] Japanese Unexamined Patent Publication No. 343683/2004 (Tokukai 2004-343683; Published on December 2, 2004)

### DISCLOSURE OF INVENTION

Conventionally, multimedia content including content and sub-content attached to the content has been transmitted in conventional cases. The load on the communication path therefore increased with an increase in the volume of the multimedia content.

The present invention was made to solve the above problem, and it is an object of the present invention to provide an interactive service system or the like by which the load on the communication path is made less than the conventional cases.

In order to achieve the object, an interactive service system of the present invention is an interactive service system in which (i) a service provider transmits, to a service requestor, multimedia content including content and sub-content attached to the content, and (ii) the service requestor transmits, to the service provider, a message with respect to the multimedia content, the service provider transmitting, to the service requestor, the content and sub-content included in the multimedia content via separate communication paths, and the service requestor transmitting the message according to destination data which is provided in the service requestor.

Conventionally, content and sub-content have been transmitted as multimedia content. Accordingly, the content and sub-content are simultaneously transmitted via a single communication path. This caused an increase in the load on the communication path.

In view of that, in the present invention, the content and sub-content in the multimedia content are transmitted via separate communication paths. Therefore, the load imposed on the communication path is made less than the conventional cases. Further, under an environment where one communication path can not be used, it is still possible to transmit the content and sub-content via another communication path.

In order to achieve the object, an interactive service system of the present invention is an interactive service system in which (i) a service provider transmits, to a service requestor, multimedia content including content and sub-content attached to the content, and (ii) the service requestor transmits, to the service provider, a message with respect to the multimedia content, the service provider transmitting, to the service requestor, the content and sub-content included in the multimedia content via a single communication path, and the service requestor transmitting the message according to the destination data which is provided in the service requestor.

In the structure, the message with respect to the multimedia content is transmitted to the service provider, based on the destination data provided in the service requestor. Accordingly, the message can be transmitted to various destinations.

The interactive service system of the present invention is preferably adapted so that the content and sub-content are transmitted to the service requestor in an asynchronous manner. In this case, the content and sub-content are less likely to be transmitted simultaneously. Therefore, the load imposed on the communication path is made less than the conventional cases. Further, it is possible to provide the interactive service described in the sub-content, at a different timing from the timing of providing the content.

Here, the destination data provided in the service requestor may be: data of an address book stored in the service requestor; or data input by the user.

The interactive service system of the present invention is preferably adapted so that the sub-content of the multimedia content includes the destination data which indicates a destination of the message. In this case, the service requestor is able to transmit the message based on the destination data included in the sub-content. Therefore, the message is transmitted, without fail, to the destination which is intended by the service provider. Accordingly, in addition to a server providing interactive services, it is possible to transmit a message to a broadcasting company, or a server of a CM production company or the like.

The content to be included in the multimedia content can be various kinds of content such as the follows: AV data, image data, video data, document data, and so on.

Further, regarding the transmission of the content and sub-content, it is preferable that the sub-content be broadcasted, or that the sub-content be transmitted irrespective of whether or not a request is received from the service requestor. This is convenient for a user requesting the service, because the service requestor does not need to transmit a request.

In order to achieve the foregoing object, a multimedia content transmitting device of the present invention includes transmitting means for transmitting multimedia content including content and sub-content attached to the content, wherein the transmitting means transmits the content and sub-content included in the multimedia content via separate communication paths respectively.

Further, a method of the present invention for controlling a multimedia content transmitting device is a method of controlling a multimedia content transmitting device for transmitting multimedia content including content and sub-content attached to the content, the method including the step of: transmitting the content and sub-content included in the multimedia content via separate communication paths respectively, or via a single communication path.

With the structure and the method, the content and sub-content in the multimedia content are transmitted via separate communication paths respectively. Therefore, as already mentioned, the load imposed on the communication path is made less than the conventional cases. Further, under an environment where one communication path can not be used, it is still possible to transmit the content and sub-content via another communication path.

In order to achieve the foregoing object, a multimedia content transmitting device of the present invention includes transmitting means for transmitting multimedia content including content and sub-content attached to the content, wherein the transmitting means transmits the content and sub-content included in the multimedia content via a single communication path..

Further, a method of the present invention for controlling a multimedia content transmitting device is a method of controlling a multimedia content transmitting device for transmitting multimedia content including content and sub-content attached to the content, the method including the step of: transmitting the content and sub-content included in the multimedia content via separate communication paths respectively, or via a single communication path.

The multimedia content transmitting device of the present invention is preferably adapted so that the content and sub-content is transmitted in an asynchronous manner. In this case, the content and sub-content are less likely to be transmitted simultaneously. Therefore, the load imposed on the communication path is made less than the conventional cases. Further, it is possible to provide various services (e.g. an interactive service) described in the sub-content, at a different timing from the timing of providing the content.

Here, it is preferable that the above-described multimedia content transmitting device transmit data (multimedia content) to a different device. The different device may be an external device.

Further, when the content reproducing device for reproducing content and the sub-content reproducing device for reproducing the sub-content are separately provided on the multimedia content reproducing side, the multimedia content transmitting device may transmit the multimedia content to both of the device, or transmit the content to the content reproducing device and the sub-content to the sub-content reproducing device.

Further, regarding the transmission of the content and sub-content, it is preferable that the sub-content be broadcasted, or that the sub-content be transmitted irrespective of whether or not a request is received from the service requestor. This is convenient for a user requesting the service, because the service requestor does not need to transmit a request.

The multimedia content transmitting device of the present invention is preferably adapted so that the sub-content includes destination data indicating destination of message with respect to the multimedia content.

With the structure, if it is the side of reproducing the multimedia content which creates and transmits the message, the message is transmitted according to the destination data. Therefore, the message can be transmitted to a destination intended by the sub-content provider.

Here, the destination data may be data corresponding to the content, in which case the destination of the message can be set on a content-by-content basis. As a result, it is possible to specify the content by referring to the destination of the message.

The multimedia content transmitting device of the present invention is adapted so that the sub-content further includes structure data which indicates a structure of the message to be created at a reproducing end for reproducing the multimedia content. Therefore, the structure of the message is regulated beforehand, a device having received the message can easily process the message.

In order to achieve the foregoing object, a multimedia content receiving device of the present invention includes receiving means for receiving multimedia content including content and sub-content attached to the content, wherein the receiving means receives the content and sub-content included in the multimedia content via separate communication paths respectively.

Further, a method of the present invention for controlling a multimedia content receiving device is a method of controlling a multimedia content receiving device for receiving multimedia content including content and sub-content attached to the content, the method including the steps of: receiving the content and sub-content included in the multimedia content via separate communication paths respectively.

With the structure and method, the content and sub-content included in the multimedia content are received via separate communication paths, respectively. Therefore, as mentioned above, the load imposed on the communication path is made less than the conventional cases. Further, under an environment where one communication path can not be used, it is still possible to transmit the content and sub-content via another communication path.

Further, a multimedia content receiving device of the present invention includes: receiving means for receiving multimedia content including content and sub-content attached to the content, wherein the receiving means receives the content and sub-content included in the multimedia content via a single communication path.

Further, a method of the present invention for controlling a multimedia content receiving device is a method of controlling a multimedia content receiving device for receiving multimedia content including content and sub-content attached to the content, the method comprising the step of: receiving the content and sub-content included in the multimedia content via separate communication paths respectively, or via a single communication path.

The multimedia content receiving device of the present invention is preferably adapted so that the content and the sub-content are received in an asynchronous manner. In this case, the content and sub-content are less likely to be transmitted simultaneously. Therefore, the load imposed on the communication path is made less than the conventional cases. Further, it is possible to provide various services (e.g. an interactive service) described in the sub-content, at a different timing from the timing of providing the content.

In order to achieve the foregoing object, a multimedia content receiving device of the present invention includes: receiving means for receiving multimedia content including content and sub-content attached to the content, wherein the receiving means receives the sub-content which is (i) broadcasted or (ii) transmitted irrespective of a request from the multimedia content receiving device.

With the structure, the multimedia content receiving device is able to receive the sub-content without a need of making a request.

Since the user of the multimedia content receiving device does not need to make a request of the sub-content, the above structure is convenient for the user.

Here, the most suitable example of the above mentioned multimedia content receiving device is one that receives data (multimedia content) from outside.

However, it is possible to use data (multimedia content) stored in the multimedia content receiving device, instead of the data received from outside. Further, the data stored in the multimedia content receiving device may be data received from the outside, or data which has been already stored in the multimedia content receiving device at the time of shipping.

Here, the multimedia content receiving device may further include sub-content reproducing means for reproducing the sub-content received by the receiving means. Further, the multimedia content receiving device may further include content reproducing means for reproducing the content received by the receiving means.

It is preferable that the multimedia content receiving device of the present invention further includes creating means for creating a message with respect to the multimedia content; and transmitting means for transmitting the created message, wherein the transmitting means transmits the message to a destination indicated by destination data provided in the multimedia content receiving device.

In the structure, the message with respect to the multimedia content is transmitted, based on the destination data provided in multimedia content receiving device. Accordingly, the message can be transmitted to various destinations.

Here, it is preferable that the above-described multimedia content transmitting device transmit data (multimedia content) to a different device. The different device may be an external device.

Further, the message is preferably transmitted by means of an e-mail system or a data transmission system similar to the e-mail system. That way, an already existing system can be utilized. Further, in this case, the message can be transmitted simply by adding an e-mail address.

Here, the destination data provided in the service requestor may be: data of an address book stored in the service requestor; or data input by the user.

The multimedia content receiving device of the present invention is preferably adapted so that the destination data is included in the sub-content received by the receiving means. In this case, the multimedia content receiving device is able to transmit the message based on the destination data included in the sub-content. Therefore, it is possible to transmit the message to the destination intended by the multimedia content providing side (particularly the sub-content providing side).

The multimedia content receiving device of the present invention is preferably adapted so that the creating means creates the message based on a message structure indicated by structure data included in the sub-content received by the receiving means. In this case, the structure of the message is determined beforehand. Therefore, the message transmitting device does not have to determine the structure of the message. Thus, the message is easily created.

Here, the above mentioned effects are also obtained by an interactive service system including: a multimedia content transmitting device, having the above structure, for transmitting multimedia content to a service provider; a message receiving device, having the above structure, for receiving a message; and a service requestor including a multimedia content receiving device, having the above structure, which receives multimedia content, and creates a message based on sub-content of the received multimedia content, and transmits the message.

Further, the above mentioned effects are also obtained by a method including the steps of: the multimedia content transmitting device transmitting, to the multimedia content receiving device, the content and sub-content included in the multimedia content via separate communication paths respectively, or via a single communication path; and the multimedia content receiving device transmitting the message according to destination data provided in the service requestor.

Here, with a program for controlling a multimedia content transmitting device, each step of the method for controlling a multimedia content transmitting device can be executed on a computer. Further, with a program for controlling a multimedia content receiving device, each step of the method for controlling the multimedia content receiving device can be executed on a computer. Further, with a program for controlling an interactive service system, each step of the method for controlling the interactive service system can be executed on a computer.

Further, by storing the program for controlling the multimedia content transmitting device in a computer-readable storage medium, it is possible to run the program on any given computer. Further, by storing the program for controlling the multimedia content receiving device in a computer-readable storage medium, it is possible to run the program on any given computer. Further, by storing the program for controlling the interactive service system in a computer-readable storage medium, it is possible to run the program on any given computer.

As mentioned above, in an interactive service system of the present invention, content and sub-content included in multimedia content are transmitted via separate communication paths, respectively. Therefore, it is possible to make the load on the communication path less than that of conventional cases.

### BRIEF DESCRIPTION OF DRAWINGS

Fig. 1 is a block diagram showing a schematic arrangement of an interactive service system of an embodiment in accordance with the present invention.
Fig. 2 is a block diagram showing a schematic arrangement of an AV content creating device in the interactive service system.
Fig. 3 is a block diagram showing a schematic arrangement of an AV content combining/transmitting device in the interactive service system.
Fig. 4 is a block diagram showing a schematic arrangement of a mobile phone terminal in the interactive service system.
Fig. 5 is a block diagram showing a schematic arrangement of an AV content related service providing device in the interactive service system.
Fig. 6 is a diagram showing a data structure of the AV content used in the interactive service system.
Fig. 7 is a diagram showing one example of a sub-content included in the AV content, the sub-content shown by data written in XML.
Fig. 8 is a diagram showing one example of an HTML document included in the sub-content, the HTML document shown by data written in HTML.
Fig. 9(a) is a diagram showing one example of display screen images based upon the AV content, and is showing a main screen image.
Fig. 9(b) is a diagram showing one example of display screen images based upon the AV content, and is showing a search screen image.
Fig. 10 is a timing chart showing timings for transmitting AV data and the sub-content included in the AV content.
Fig. 11 is a diagram showing a structure of a message created by the mobile phone terminal and one example of the message.
Fig. 12 is a flow chart showing processing operations carried out by the mobile phone terminal.
Fig. 13 shows a process sequence showing processes of respective devices in the interactive service system and data flow among the devices.
Fig. 14 is a block diagram showing a schematic arrangement of an interactive service system of another embodiment of the present invention.
Fig. 15 is a block diagram showing a schematic arrangement of an AV content creating/transmitting device in the interactive service system.
Fig. 16 is a block diagram showing a schematic arrangement of an AV content reproducing device in the interactive service system.
Fig. 17 is a block diagram showing a schematic arrangement of an AV content related service providing device in the interactive service system.
Fig. 18 is a time chart showing one example of broadcasting program IDs and scene IDs utilized in the interactive service system.
Fig. 19 is a diagram showing one example of sub-content included in the AV content, the sub-content shown by data written in XML.
Fig. 20 is a diagram showing one example of an HTML document included in the sub-content, the HTML document shown by data written in HTML.
Fig. 21(a) is a diagram showing one example of display screen images based upon the AV content.
Fig. 21 (b) is a diagram showing one example of display screen images based upon the AV content.
Fig. 22 is a diagram showing a structure of a message created by the AV content reproducing device and one example of the message.
Fig. 23 is a flow chart showing processing operations carried out by the AV content reproducing device.
Fig. 24 is a flow chart showing details of processing operations for creating and transmitting the message in the processing operations.
Fig. 25 is a block diagram showing a schematic arrangement of an alternative form of the interactive service system.
Fig. 26 is a block diagram showing a schematic arrangement of another alternative form of the interactive service system.
Fig. 27 is a diagram showing another example of a sub-content included in the AV content, the sub-content shown by data written in XML.
Fig. 28 is a diagram showing one example of an HTML document included in the sub-content, the HTML document shown by data written in HTML.
Fig. 29 is a diagram showing one example of display screen images based upon the AV content.
Fig. 30 is a diagram showing another example of a sub-content included in the AV content, the sub-content shown by data written in XML.
Fig. 31 is a block diagram showing a schematic arrangement of an interactive service system of another embodiment, in accordance with the present invention.
Fig. 32 is a block diagram showing a schematic arrangement of an AV content creating/transmitting device in the interactive service system.
Fig. 33 is a block diagram showing a schematic arrangement of a sub-content reproducing device in the interactive service system.
Fig. 34 is a block diagram showing a schematic arrangement of an AV data reproducing device in the interactive service system.
Fig. 35 is a block diagram showing a schematic arrangement of an AV content related service providing device in the interactive service system.
Fig. 36 is a diagram showing one example of sub-content utilized in the interactive service system, the sub-content shown by data written in XML.
Fig. 37 is a diagram showing one example of an HTML document included in the sub-content, the HTML document shown by data written in HTML.
Fig. 38(a) is a diagram showing one example of display screen images based upon the AV content.
Fig. 38(b) is a diagram showing one example of display screen images based upon the sub-content.
Fig. 39 is a diagram showing a structure of a message created by the sub-content reproducing device and one example of the message.
Fig. 40 is a flow chart showing processing operations carried out by the sub-content reproducing device.
Fig. 41 is a flow chart showing processing operations carried out by the AV data reproducing device.
Fig. 42 is a block diagram showing a schematic arrangement of an interactive service system of yet another embodiment of the present invention.
Fig. 43 is a diagram showing one example of sub-content utilized in the interactive service system, the sub-content shown by data written in XML.
Fig. 44 is a diagram showing one example of an HTML document included in the sub-content, the HTML document shown by data written in HTML.
Fig. 45(a) is a diagram showing one example of display screen images based upon the AV content, and is showing a main screen image.
Fig. 45(b) is a diagram showing one example of display screen images based upon the AV content, and is showing a question screen image.
Fig. 46 is a diagram showing, in the form of a table, one example of broadcasting program information stored in a broadcasting program information storing section in the AV content related service providing device shown in Fig. 5.
Fig. 47 is a diagram showing, in the form of a table, one example of a database stored in an input content storage section in the AV content related service providing device.
Fig. 48 is a diagram showing, in the form of a table, one example of a database stored in a shop information storage section in the AV content related service providing device.
Fig. 49 is a flow chart showing processing operations carried out by the AV content related service providing device.
Fig. 50 is a diagram showing a structure of the sub-content, using an MMS message template.
Fig. 51 is a diagram showing one example of a message template included in the MMS message template, the message shown by data written in XML.

### REFERENCE NUMERALS

- 10, 70, 100, 120: interactive service system
- 11: AV content creating device (multimedia content creating device)
- 12: AV content combining/ transmitting device (multimedia content transmitting device, multimedia content creating device)
- 14: mobile phone terminal (multimedia content reproducing device, message transmitting device)
- 15, 75, 105, 125: AV content related service providing device (message receiving device)
- 22, 83: AV content creating section (creating means)
- 23, 34, 85: AV content transmitting section (multimedia content transmitting means)
- 32: AV content combining section (creating means)
- 36: broadcasting program information transmitting section (content identifying information transmitting means)
- 44: AV content receiving section (receiving means)
- 45: communication section (receiving means)
- 50, 92: AV content analyzing section (sub-content acquiring means, content acquiring means)
- 52: layout instructing section (switching means)
- 54: reproducing section (sub-content reproducing means, content reproducing means)
- 55: message creating section (creating means, transmitting means)
- 60: broadcasting program information receiving section (acquiring means)
- 61: message receiving section (receiving means)
- 62, 96: message analyzing section (acquiring means)
- 63: broadcasting program information judging section (identifying means)
- 64, 97: input content storage section (storage means)
- 66: message replying section (providing means)
- 72, 102, 123: AV content creating/transmitting device (multimedia content transmitting device, multimedia content creating device)
- 74, 124: AV content reproducing device (multimedia content reproducing device, message transmitting device)
- 77 AV: content reproducing device (multimedia content reproducing device)
- 86: ID transmitting section (content identifying information transmitting means)
- 93: sub-content forwarding section (sub-content transmitting means)
- 94, 117: sub-content acquiring section (sub-content acquiring means)
- 95: ID receiving section (acquiring means)
- 104 AV: data reproducing device (content reproducing device)
- 107: sub-content reproducing device (message transmitting device)
- 113: broadcasting program broadcasting information transmitting section (content identifying information transmitting means)
- 118: AV data reproduction instructing section (reproduction instructing information transmitting means)
- D10: AV content (multimedia content)
- D11: AV data(content)
- D12, D22, D32, D42: sub-content
- D14: message destination information (destination data)
- D15: message structure information (structure data)
- D18: AV data identifying information (content identifying information)

### BEST MODE FOR CARRYING OUT THE INVENTION

### [Embodiment 1]

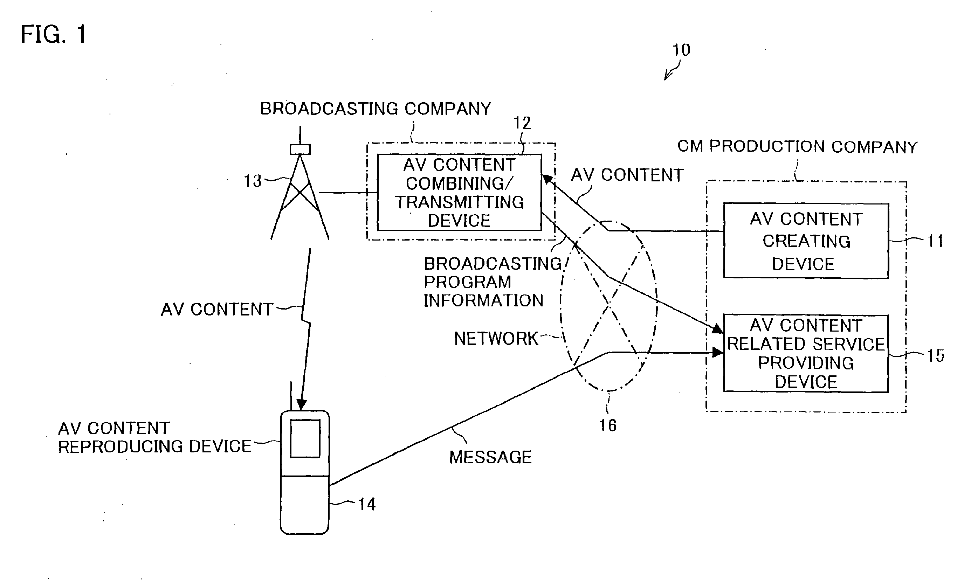

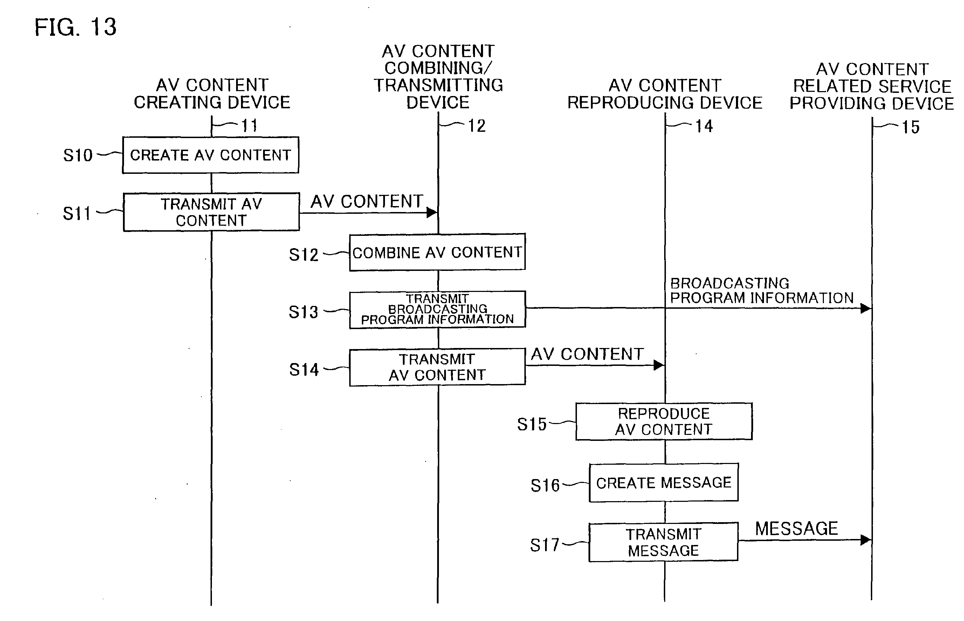

The following explains one embodiment of the present invention in reference to Figs. 1 to 13. Fig. 1 shows a schematic arrangement of an interactive service system of the present embodiment. An interactive service system 10 provides a service which allows a user of a mobile phone terminal to search for a shop which is advertised by a CM displayed on the mobile phone terminal and is located near the mobile phone terminal. Fig. 13 shows a process sequence showing processes of devices in the interactive service system 10 and data flow among the devices.

As shown in Fig. 1, the interactive service system 10 is arranged so that an AV content creating device 11, an AV content combining/transmitting device 12, one or more mobile phone terminals (AV content reproducing devices) 14, and an AV content related service providing device 15 are communicably connected with each other through a communication network 16. The mobile phone terminal 14 has a function of receiving AV content (multimedia content) from the AV content combining/ transmitting device 12 through a relay station 13 to reproduce the AV content.

Note that in the present embodiment, a CM production company owns the AV content creating device 11 and the AV content related service providing device 15, a broadcasting company owns the AV content combining/ transmitting device 12 and the relay station 13, and a viewer owns the mobile phone terminal 14. Moreover, well-known communication networks can be used as the communication network 16, such as a mobile communication network, a telephone network, the Internet, a LAN (Local Area Network), etc.

The AV content creating device 11 creates AV content including CM-use AV data and sub-content, the CM-use AV data being reproduced as a video and audio of a CM (S10 in Fig. 13). Then, the AV content creating device 11 transmits the created AV content to the AV content combining/transmitting device 12 through the communication network 16 (S11 in Fig. 13).

The AV content combining/ transmitting device 12 combines the AV content, received from the AV content creating device 11, with broadcasting program-use AV data to be reproduced as a video and audio of a TV program (S12 in Fig. 13). Then, the AV content combining/ transmitting device 12 transmits broadcasting program information, indicating a broadcasting time of the AV content, to the AV content related service providing device 15 (S13 in Fig. 13). The AV content combining/ transmitting device 12 broadcasts the combined AV content in a predetermined period of time through the relay station 13 (S14 in Fig. 13).

The AV content is so arranged as to include AV data and sub-content attached to the AV data. Moreover, the sub-content may include reproduction data reproduced in conjunction with the AV data or reproduction data reproduced independently of the AV data. Further, the sub-content may include a set of reproduction data or a plurality of sets of reproduction data.

In the present embodiment, the AV data is AV data obtained by combining the CM-use AV data and the broadcasting program-use AV data, and is streaming data that is the received data reproduced in real time. Moreover, the sub-content is attached to the CM-use AV data, and includes (i) layout designating data which switches between a CM screen image for displaying a CM and a search screen image for carrying out searching, and which designates a display layout, (ii) destination data indicating a structure and destination of a message transmitted from the mobile phone terminal 14 to the AV content related service providing device 15, and (iii) data for specifying the AV data. Note that the sub-content attached to the broadcasting program-use AV data may be included in the AV content.

In the present embodiment, the mobile phone terminal 14 has a function of utilizing GPS (Global Positioning Systems) to acquire latitude / longitude information indicating latitude and longitude of the mobile phone terminal 14 itself. The mobile phone terminal 14 receives the AV content from the AV content combining/transmitting device 12, and then reproduces the received AV content. That is, the mobile phone terminal 14 displays either the CM screen image or the search screen image in accordance with the designated display layout, and switches to the other screen image in accordance with an operation carried out by a user (S 15 in Fig. 13).

Here, when the viewer (user of the mobile phone terminal 14) selects a search button on the search screen image, the mobile phone terminal 14 creates a message in accordance with data indicating the structure of the data (S16 in Fig. 13). The message includes: personal information (for example, address, name, etc.) and mail address set up in advance in an AV content reproducing device 74; current positional information of the mobile phone terminal 14; and information for specifying the CM. In the present embodiment, channel information indicating currently viewed channel and screen image switched time information indicating time of switching of the screen image to the search screen image are utilized as the information for specifying the CM. Then, the mobile phone terminal 14 transmits the created message in accordance with data indicating the destination (in an example shown in Fig. 1, the AV content related service providing device 15) of the message (S17 in Fig. 13).

The AV content related service providing device 15 searches for shop information in accordance with the message received from the mobile phone terminal 14, and then sends a search result back to the mobile phone terminal 14. Thus, the viewer can find where the nearby shop advertised by the CM is.

Moreover, because the sub-content of the AV content created by the AV content creating device 11 includes destination data indicating that the destination is the AV content related service providing device 15, the message from the mobile phone terminal 14 can be received by a device desired by the CM production company. As a result, the CM production company can directly provide various services, based upon a content of the message, to the user of the mobile phone terminal 14, directly collect feedbacks from the user of the mobile phone terminal 14 about the CM, or the like.

Moreover, because the user of the mobile phone terminal 14 needs not input the destination of the message, it is possible to cut out the need of input and prevent missending the message due to an inputting error.

The following explains in detail respective members in the interactive service system 10 of the present embodiment.

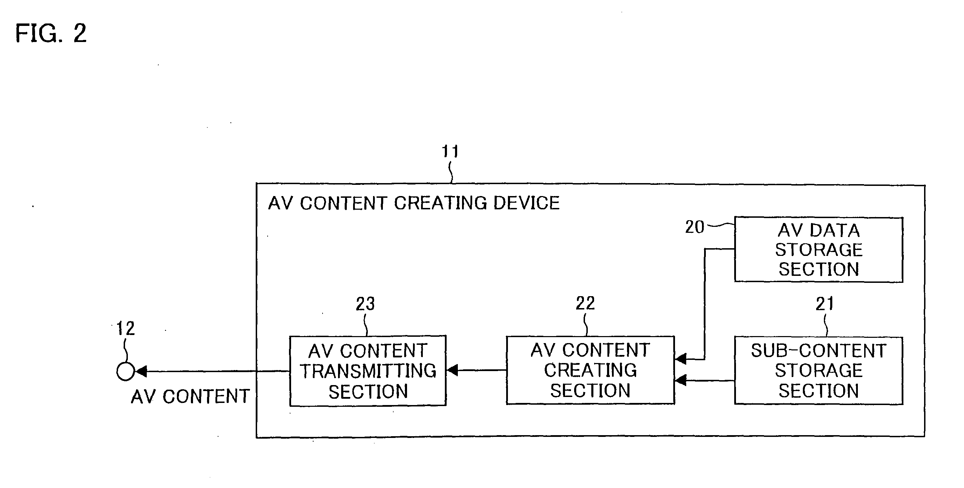

Fig. 2 shows a schematic arrangement of the AV content creating device 11. As described above, the AV content creating device 11 creates the AV content including the CM-use AV data and the sub-content attached to the CM-use AV data, the CM-use AV data being reproduced as a video and audio of a CM. As shown in Fig. 2, the AV content creating device 11 is so arranged as to include an AV data storage section 20, a sub-content storage section 21, an AV content creating section 22, and an AV content transmitting section 23.

The AV data storage section 20 stores a set of or a plurality of sets of CM-use AV data created in advance by the CM production company. The sub-content storage section 21 stores various sub-content attached to the CM-use AV data, the sub-content being created in advance by the CM production company. The AV data storage section 20 and the sub-content storage section 21 include a memory device, such as a HDD (Hard Disc Drive). Note that details about the sub-content are described later.

The AV content creating section 22 retrieves desired CM-use AV data from the AV data storage section 20, and also retrieves sub-content corresponding to the CM-use AV data from the sub-content storage section 21, so as to create AV content including the CM-use AV data and the sub-content. The AV content creating section 22 transmits the created AV content to the AV content transmitting section 23. The AV content creating section 22 is realized by causing a CPU to execute a program stored in a memory device, such as a RAM, a flash memory, or the like.

The AV content transmitting section 23 transmits the AV content, received from the AV content creating section 22, to the AV content combining/ transmitting device 12 through the communication network 16.

Note that the sub-content storage section 21 may store (i) the sub-content whose message destination is not specified and (ii) a message destination corresponding to the CM-use AV data. In this case, the AV content creating section 22 retrieves desired CM-use AV data from the AV data storage section 20, and also retrieves the message destination corresponding to the CM-use AV data and the sub-content from the sub-content storage section 21. Then, the AV content creating section 22 incorporates the message destination in the sub-content, and create the AV content including the sub-content and the CM-use AV data.

With this, since the CM production company can change the message destination for each CM, it is possible to provide services different for different CMs or to collect feedbacks for respective CMs from the users.

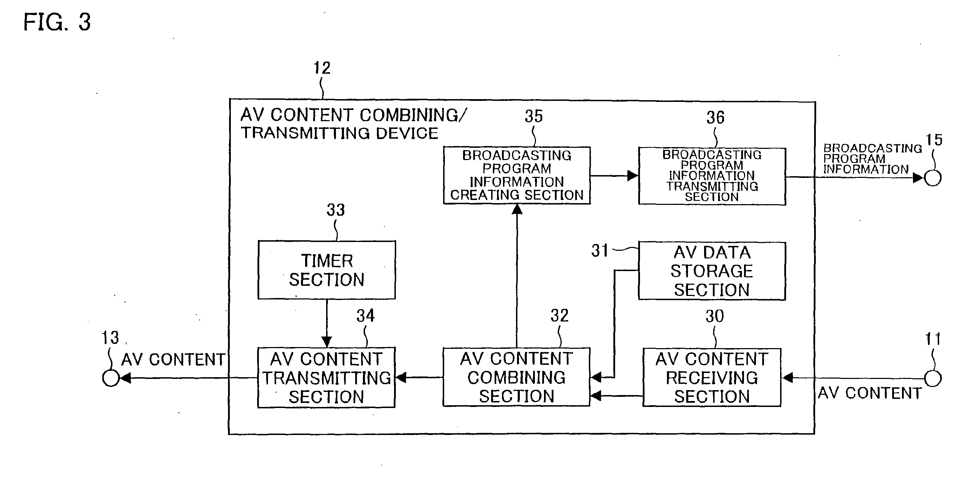

Fig. 3 shows a schematic arrangement of the AV content combining/transmitting device 12. As described above, the AV content combining/transmitting device 12 combines the AV content, received from the AV content creating device 11, with the broadcasting program-use AV data to be reproduced as a video and audio of a TV program, and then the AV content combining/transmitting device 12 broadcasts the combined AV content in a predetermined period of time through the relay station 13. As shown in Fig. 3, the AV content combining/ transmitting device 12 is so arranged as to include an AV content receiving section 30, an AV data storage section 31, an AV content combining section 32, a timer section 33, an AV content transmitting section 34, a broadcasting program information creating section 35, and a broadcasting program information transmitting section 36.

The AV content receiving section 30 receives the AV content from the AV content creating device 11 through the communication network 16. The AV content receiving section 30 transmits the received AV content to the AV content combining section 32.

The AV data storage section 31 stores a set of or a plurality of sets of broadcasting program-use AV data created in advance by the broadcasting company. The AV data storage section 31 includes a memory device, such as a HDD (Hard Disc Drive).

The AV content combining section 32 retrieves desired broadcasting program-use AV data from the AV data storage section 31 to combine the retrieved broadcasting program-use AV data with the AV content received from the AV content creating device 11 through the communication network 16 and the AV content receiving section 30. Specifically, the CM-use AV data is inserted between the broadcasting program-use AV data. Broadcasting hours of the broadcasting program and broadcasting hours of the CM(s) are specified at this point.

The AV content combining section 32 transmits the combined AV content to the AV content transmitting section 34. Moreover, the AV content combining section 32 transmits information about the specified broadcasting hours of the broadcasting program and the CM(s) to the broadcasting program information creating section 35. The AV content combining section 32 is realized by causing a CPU to execute a program stored in a memory device, such as a RAM, a flash memory, or the like.

Note that it is preferable that an AV content storage section (not shown) for storing the AV content from the AV content creating device 11 be provided between the AV content receiving section 30 and the AV content combining section 32. In this case, the AV content combining section 32 combines the broadcasting program-use AV data with the AV content from the AV content creating device 11 at a desired timing.

The timer section 33 measures time. The timer section 33 transmits time information of measured time to the AV content transmitting section 34.

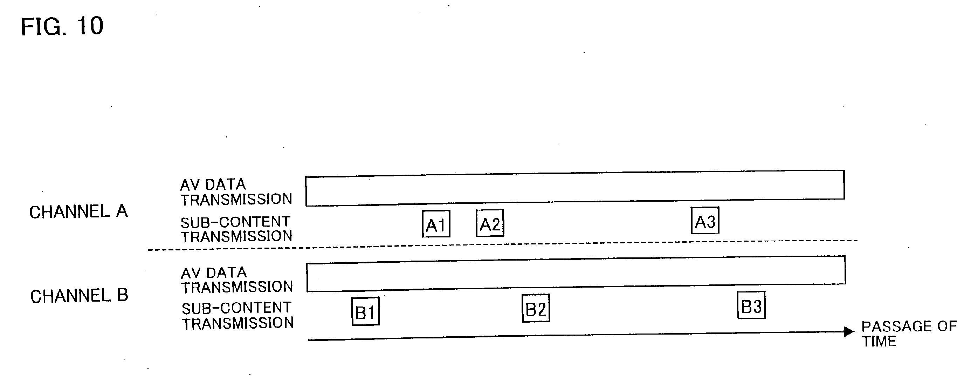

The AV content transmitting section 34 transmits the AV content, received from the AV content combining section 32, to the relay station 13 in accordance with the time information received from the timer section 33. Thus, the AV content is broadcasted from the relay station 13. Fig. 10 shows timings for transmitting the AV data and the sub-content included in the AV content. As shown in Fig. 10, the AV content combining/transmitting device 12 constantly transmits the AV data as stream data, and also transmits the sub-content at various timings.

In Fig. 3, the broadcasting program information creating section 35 creates broadcasting program information in accordance with information of the broadcasting hours of the broadcasting program and the CM, the information received from the AV content combining section 32. The broadcasting program information creating section 35 transmits the created broadcasting program information to the broadcasting program information transmitting section 36.

The broadcasting program information transmitting section 36 transmits the broadcasting program information, received from the broadcasting program information creating section 35, to the AV content related service providing device 15 through the communication network 16.

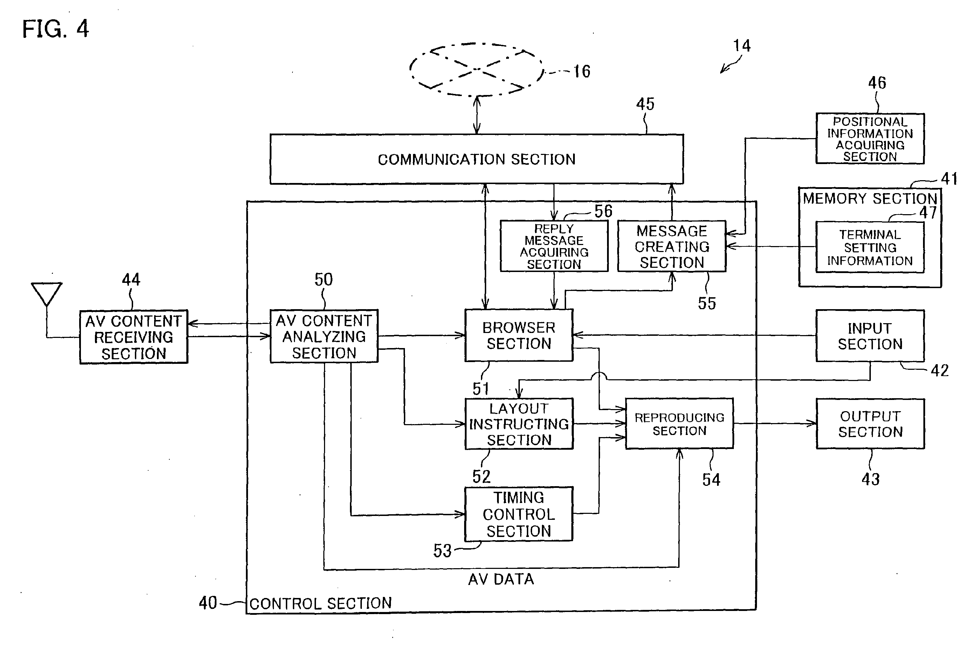

Fig. 4 shows a schematic arrangement of the mobile phone terminal 14. As shown in Fig. 4, the mobile phone terminal 14 is so arranged as to include a control section 40, a memory section 41, an input section 42, an output section 43, an AV content receiving section 44, a communication section 45, and a positional information acquiring section 46.

The control section 40 totally controls various members in the mobile phone terminal 14. Functions of the control section 40 are realized by causing a CPU to execute a program stored in a memory device, such as a RAM, a flash memory, or the like. Note that details about the control section 40 are described later.

The memory section 41 stores various information. The memory section 41 includes, for example, a flash memory, a HDD, or the like. In the present embodiment, the memory section 41 stores terminal setting information 47. The terminal setting information 47 includes: personal identifying information, such as user's address, name, age, occupation, etc.; and terminal identifying information, such as the telephone number, the e-mail address, etc. of the mobile phone terminal 14.

The input section 42 accepts user's input(s) of various information, such as selection information, instruction information, textual information, etc. The input section 42 is exemplified by a keyboard, a numeric keypad, a pointing device, etc. The input section 42 generates an input signal in accordance with the user's input, and then transmits the input signal to the control section 40.

The output section 43 outputs various information, such as a character, an image, an audio, etc. Specifically, the output section 43 includes (i) a display device, such as an LCD (Liquid Crystal Display), an EL (Electroluminescence) display, a PDP (Plasma Display Panel), or the like, for displaying various information, such as the character, the image, etc., and (ii) an audio output device, such as an earphone, a speaker, or the like. The user can watch the image (including a still image and a moving image) and the character outputted by the output section 43, and listen to an audio and a music outputted by the output section 43.

The AV content receiving section 44 receives an electric wave of the AV content from the relay station 13, carries out a predetermined treatment with respect to the received AV content, and then transmits the AV content to the control section 40.

The communication section 45 converts data, received from the control section 40, to a form suitable for data communication, and then transmits the converted signal to the communication network 16. Moreover, the communication section 45 converts a signal, received from the communication network 16, to the original form, and then transmits the converted data to the control section 40.

The positional information acquiring section 46 acquires positional information of a current position of the mobile phone terminal 14. The positional information acquiring section 46 transmits the acquired positional information to the control section 40. In the present embodiment, a method for acquiring the positional information is a method for acquiring the latitude/longitude information of a current position of the mobile phone terminal 14 by utilizing GPS (Global Positioning Systems), however it is possible to utilize arbitrary methods, such as a method for inputting a current address of the mobile phone terminal 14 by the user using the input section 42, a method for utilizing an address of a base station which wirelessly communicates with the mobile phone terminal 14, etc.

The following explains details about the control section 40. As shown in Fig. 4, the control section 40 is so arranged as to include an AV content analyzing section 50, a browser section 51, a layout instructing section 52, a timing control section 53, a reproducing section 54, a message creating section 55, and a reply message acquiring section 56.

The AV content analyzing section 50 analyzes the AV content acquired from the AV content combining/ transmitting device 12 through the relay station 13 and the AV content receiving section 44. Specifically, the AV content analyzing section 50 identifies the AV data from the acquired AV content to transmit the AV data to the reproducing section 54. Moreover, the AV content analyzing section 50 identifies the sub-content from the acquired AV content, analyzes the sub-content, and gives various instructions to the browser section 51, the layout instructing section 52, and the timing control section 53 in accordance with an analysis result of the sub-content.

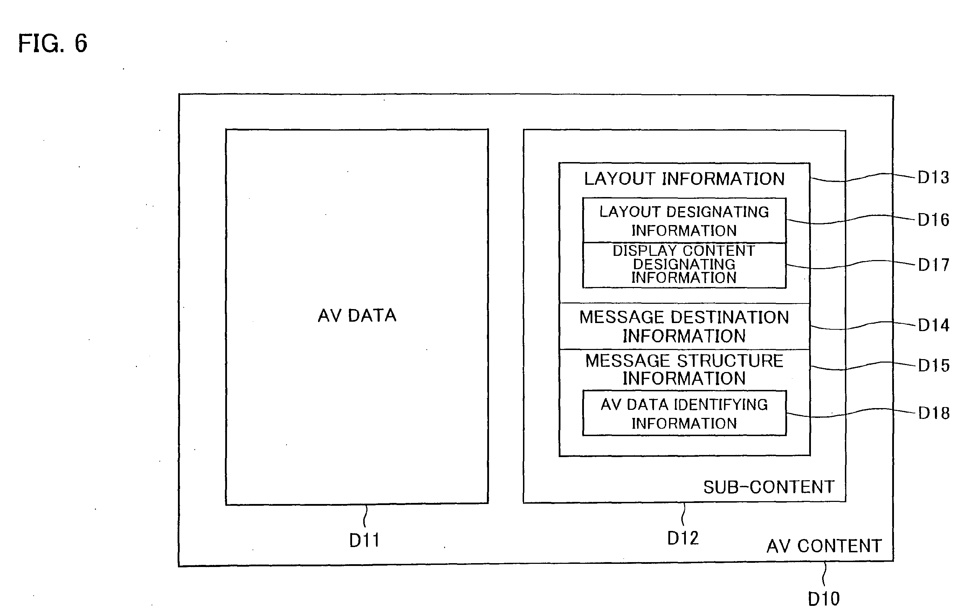

Fig. 6 shows an arrangement of the AV content utilized in the present embodiment. As shown in Fig. 6, AV content D 10 is so arranged as to include AV data D 11 and sub-content D12. Further, the sub-content D12 is so arranged as to include layout information D 13 concerning a display layout of a screen, message destination information D14 indicating a destination of a message, and message structure information D15 indicating a structure of the message.

The layout information D13 is so arranged as to include layout designating information D16 for designating the display layout of the screen, and display content designating information D17 for designating display content. The message structure information D15 includes AV data identifying information (ID) D18 for specifying the AV data.

In Fig. 4, the AV content analyzing section 50 transmits information concerning layout to the layout instructing section 52, information concerning an HTML document and a message to the browser section 51, and information concerning a display timing to the timing control section 53.

The browser section 51 creates display data in accordance with HTML data included in the sub-content D12. The browser section 51 (i) accesses a site through the communication section 45 and the communication network 16 in accordance with an URL (Uniform Resource Locator) designated by the sub-content D12, (ii) acquires various data, such as HTML data, image data, etc., from the outside, and (iii) creates the display data in accordance with the acquired data. The browser section 51 transmits the created display data to the reproducing section 54. Further, the browser section 51 transmits the information concerning a message, included in the sub-content D12, to the message creating section 55 in accordance with an instruction given from the input section 42.

The layout instructing section 52 gives an instruction concerning the display layout to the reproducing section 54 in accordance with the information concerning layout received from the AV content analyzing section 50. Moreover, the timing control section 53 controls the display timing of the reproducing section 54 in accordance with the information concerning display timing received from the AV content analyzing section 50. The display timing is controlled in the case in which a plurality of display content designations are in the sub-content and the display content designation changes over time.

The reproducing section 54 decodes the AV data received from the AV content analyzing section 50, and then reproduces the decoded data and the display data, received from the browser section 51, in accordance with the instruction given from the layout instructing section 52 and the control carried out by the timing control section 53. The reproducing section 54 transmits the reproduced data to the output section 43, so that the output section 43 displays the data.

The message creating section 55 creates a message in accordance with the information concerning message received from the browser section 51, the terminal setting information 47 stored in the memory section 41, and the latitude/longitude information acquired by the positional information acquiring section 46. The message creating section 55 transmits the created message to the AV content related service providing device 15 through the communication section 45 and the communication network 16.

The reply message acquiring section 56 acquires a reply message through the communication network 16 and the communication section 45, the reply message being created by the AV content related service providing device 15 as a reply to the message created by the message creating section 55. The reply message acquiring section 56 outputs the acquired reply message for the user by using the browser section 51, the reproducing section 54, and the output section 43.

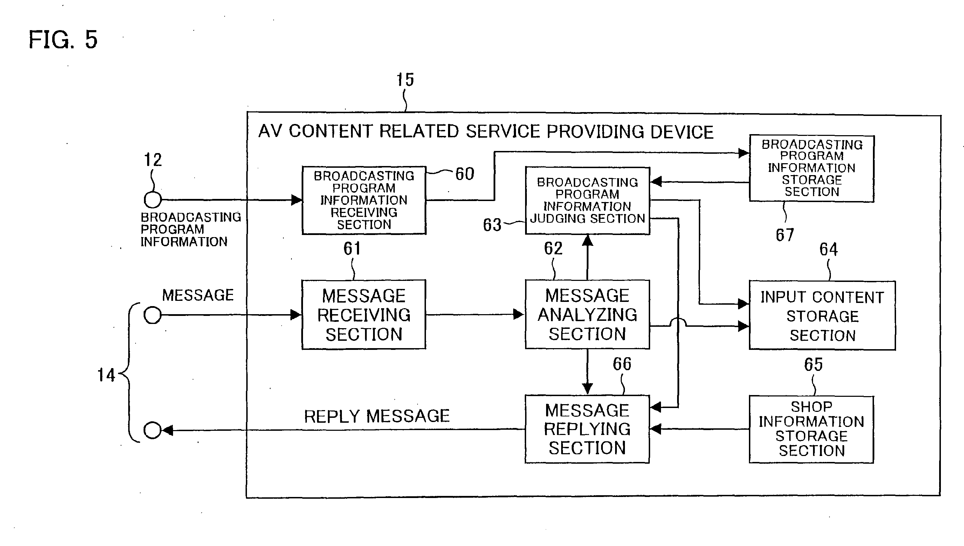

Fig. 5 shows a schematic arrangement of the AV content related service providing device 15. As shown in Fig. 5, the AV content related service providing device 15 is so arranged as to include a broadcasting program information receiving section 60, a message receiving section 61, a message analyzing section 62, a broadcasting program information judging section 63, an input content storage section 64, a shop information storage section 65, a message replying section 66 and a broadcasting program information storage section 67.

The broadcasting program information receiving section 60 receives the broadcasting program information, created by the AV content combining/transmitting device 12, through the communication network 16. The broadcasting program information receiving section 60 transmits the received broadcasting program information to the broadcasting program information storage section 67.

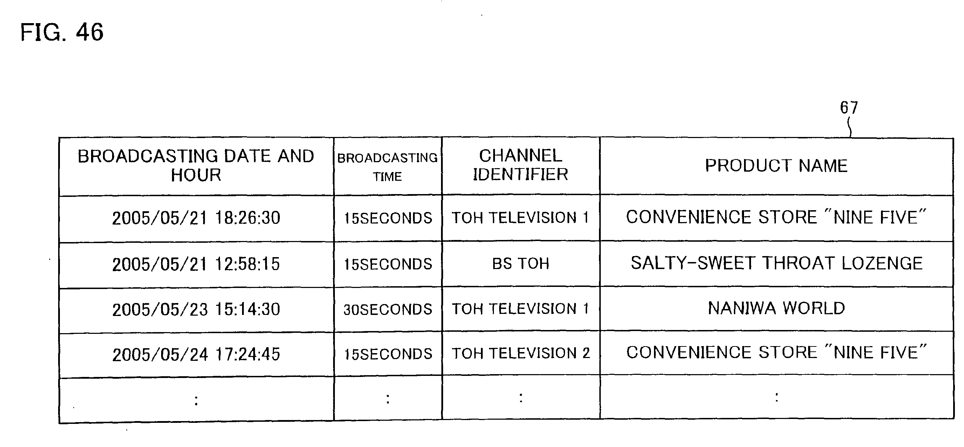

The broadcasting program information storage section 67 stores the broadcasting program information received from the broadcasting program information receiving section 60. Fig. 46 shows, in the form of a table, one example of the broadcasting program information stored in the broadcasting program information storage section 67. As shown in Fig. 46, the broadcasting program information includes broadcasting date and hour, a broadcasting time, a channel identifier and a product name. The broadcasting program information is transmitted from the AV content combining/transmitting device 12 to the AV content related service providing device 15. Note that in the case in which the CM production company creates only a CM for one product, it is possible to omit the product name in Fig. 46.

Note that the channel identifier shown in Fig. 46 is a unique ID for specifying the channel. This is because it is necessary to specify at which channel the AV content (CM) is scheduled to be broadcasted in the case in which the broadcasting company simultaneously broadcasts a plurality of broadcasting programs by utilizing a plurality of channels.

Therefore, in the case in which the broadcasting company carries out broadcasting by utilizing only one channel, it is possible to omit the channel identifier from the broadcasting program information which is transmitted from the AV content combining/ transmitting device 12 to the AV content related service providing device 15. In this case, the AV content related service providing device 15 only have to specify the broadcasting company that is the sender, and add, to the broadcasting program information, the channel identifier corresponding to the specified broadcasting company. Moreover, in the case in which channel numbers do not change depending on areas, it is possible to use the channel number as the channel identifier.

The message receiving section 61 receives the message, created by the mobile phone terminal 14, through the communication network 16. The message receiving section 61 transmits the received message to the message analyzing section 62.

The message analyzing section 62 analyzes the message received from the message receiving section 61. The message analyzing section 62 transmits various information, included in the message, to various blocks. Specifically, the message analyzing section 62 transmits (i) the screen image switched time information and the channel information (channel identifier) to the broadcasting program information judging section 63, (ii) the terminal setting information 47 and the latitude/longitude information to the input content storage section 64, and (iii) the latitude/longitude information and the mail address of a message sender to the message replying section 65.

The broadcasting program judging section 63 specifies a CM in accordance with the screen image switched time information and channel information received from the message analyzing section 62 and the broadcasting program information stored in the broadcasting program information storage section 67. The broadcasting program information judging section 63 stores information of the specified CM and the broadcasting program information in the input content storage section 64. In addition, the broadcasting program information judging section 63 transmits the information of the specified CM to the message replying section 66.

The input content storage section 64 associates the terminal setting information 47 and the latitude/longitude information, received from the message analyzing section 62, with the information of the CM and the broadcasting program information received from the broadcasting program information judging section 63, so as to store those information therein. Thus, the CM production company can find out where the viewer who watched and was interested in a CM is and what time the CM was broadcasted.

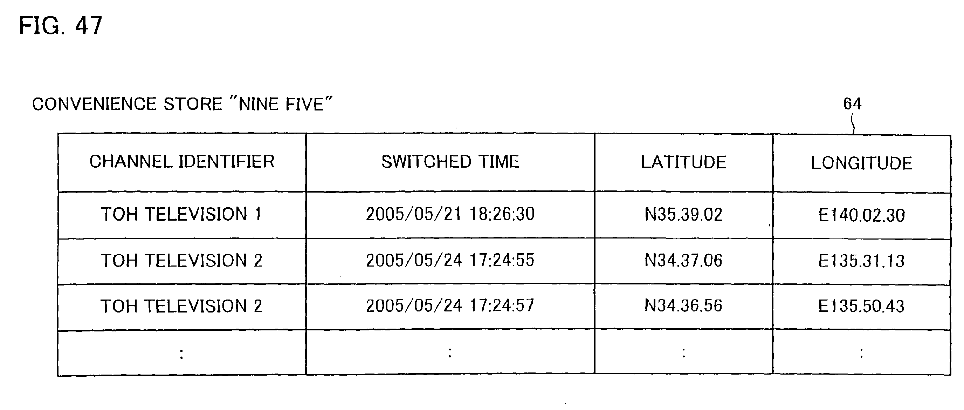

Fig. 47 is shows, in the form of a table, one example of a database stored in the input content storage section 64. The input content storage section 64 stores databases different for different CMs. The database shown in Fig. 47 is one example of a database of a convenience store "NINE FIVE". The database stores the channel information (channel identifier) included in the message, the switched time information, and the latitude/longitude information.

The shop information storage section 65 stores the shop information which includes information for specifying a shop, such as the name of the shop, and the latitude/longitude information of the shop. Note that the input content storage section 64 and the shop information storage section 65 include a memory device, such as a flash memory, a HDD, or the like.

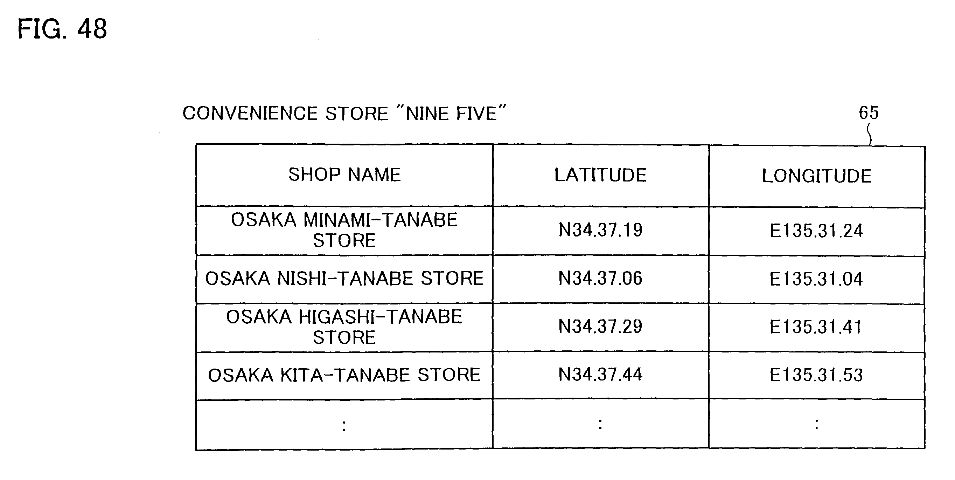

Fig. 48 shows, in the form of a table, one example of a database stored in the shop information storage section 65 in the present embodiment. The shop information storage section 65 stores databases different for different CMs. The database shown in Fig. 48 is one example of a database of the convenience store "NINE FIVE". The database includes a shop name, a longitude and latitude of a location of the shop.

The message replying section 66 creates the reply message as a reply to the received message. The message replying section 66 transmits the created reply message through the communication network 16 to the mobile phone terminal 14 that is the message sender.

In the present embodiment, the message replying section 66 judges whether the CM utilizes the shop information, in accordance with the CM specified by the broadcasting program judging section 63. In the case in which the CM utilizes the shop information, the message replying section 66 searches the shop information storage section 65 for a shop having latitude/longitude information that is most similar to the latitude/longitude information received from the message analyzing section 62. Then, the message replying section 66 transmits information of the searched shop as the reply message to the mail address of message sender received from the message analyzing section 62.

Note that the above searching may be carried out (i) by comparing the positional information (longitude/latitude information) included in the message and the positional information stored in the shop information storage section 65, so as to select a shop which locates closest to the positional information included in the message, or (ii) by further using road information, so as to select a shop so that a travel distance between the shop and the positional information included in the message is the shortest.

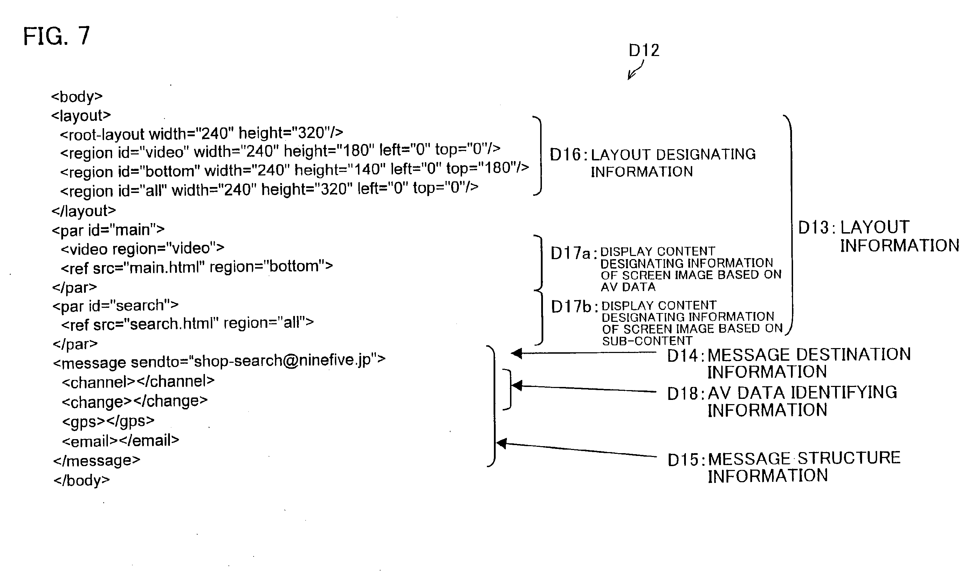

Fig. 7 shows one example of the sub-content D12. Note that the sub-content D12 in Fig. 7 is written in XML (eXtensible Markup Language), however the sub-content D12 can be written in any description format, such as HTML (Hyper Text Markup Language), XHTML (eXtensible Hyper Text Markup Language) or SMIL (Synchronized Multimedia Integration Language), or a combination thereof. Moreover, the example shown in Fig. 7 is simplified for an explanation of the present invention.

In the present embodiment, the layout designating information D16 is written between a <layout> tag and a </layout> tag. According to the example shown in Fig. 7, (i) an upper region of height 180 pixels, (ii) a lower region of height 140 pixels, and (iii) an entire region are designated in a screen of width 240 pixels × height 320 pixels (QVGA (Quarter Video Graphics Array)).

Moreover, the display content designating information D 17 is written between a <par> tag and a < / par> tag. According to the example shown in Fig. 7, display content designating information D 17a of the main screen image and display content designating information D 17b of the search screen image are included.

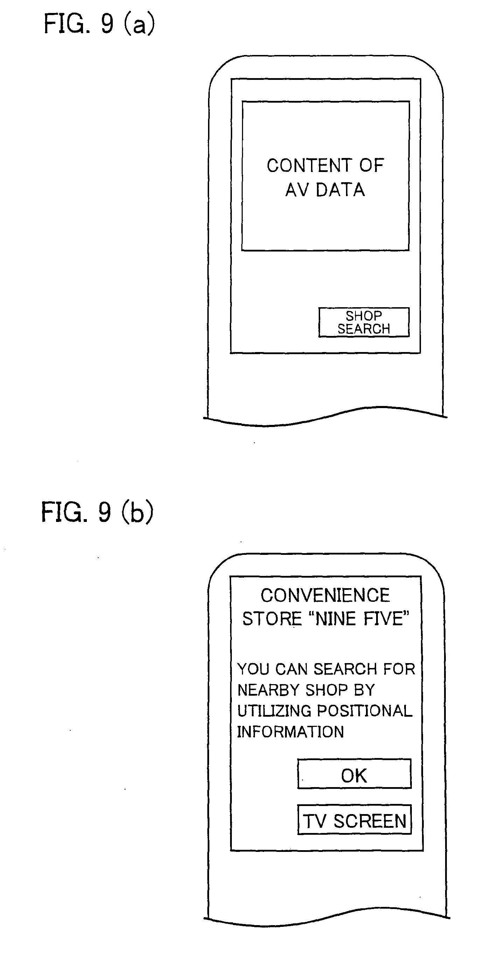

In the main screen image, a video based upon the AV data is designated in the upper region of height 180 pixels, and a content based upon an HTML document "main. html" is displayed in the lower region of height 140 pixels. Fig. 9(a) shows one example of the main screen image displayed based upon the display content designating information D17a of the main screen image. In the main screen image of Fig. 9(a), the content (video) of the AV data is displayed in the upper region, and a "shop-search" button for switching to the search screen image is displayed in the lower region.

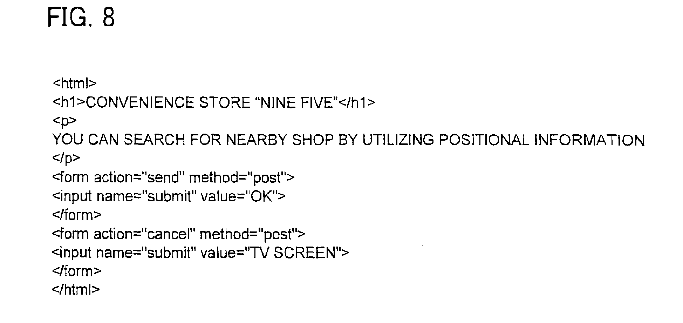

Meanwhile, in the search screen image, the content of an HTML document "search. html" is displayed entirely. Fig. 8 shows one example of the HTML document "search. html", and Fig. 9(b) shows one example of the main screen image displayed based upon the display content designating information D 17b of the search screen image. As shown in Fig. 9(b), the content of a shop search service, an "OK" button for instructing the search, and a "TV screen image" button for switching to the main screen image are displayed in the search screen image.

Note that the HTML documents "main. html" and "search. html" are included in the sub-content D12. These HTML documents can be easily created by a person with ordinary skill in the art by reference to Figs. 9(a) and 9(b), and examples of the HTML documents are omitted in the present application.

In Fig. 7, the message destination information D14 is written inside a <message> tag, and the message structure information D 15 is written between the <message> tag and a </message> tag. In the present embodiment, information between the <message> tag and the </message> tag is a model form of a message.

In the example shown in Fig. 7, the e-mail address of the AV content related service providing device 15 is written inside the <message> tag as the message destination information D14. Moreover, a <channel> tag, a </channel> tag, a <change> tag, a </change> tag, a <gps> tag, a </gps> tag, an <email> tag, and an </email> tag are written between <message> tag and </message> tag. Note that information are written inside/between respective tags when creating a message. Moreover, these tags become the data identifying information for identifying the type of information (data).

Moreover, the channel information indicating a channel of a TV program is written between the <channel> tag and the </channel> tag, and the switched time information indicating time of switching of the screen image to the search screen image is written between the <change> tag and the </change> tag. The channel information and the switched time information becomes the AV data identifying information D 18.

Further, the latitude/longitude information indicating the current position of the mobile phone terminal 14 is written between the <gps> tag and the </gps> tag, and the e-mail address is written between the <email> tag and the </email> tag as message sender information.

Note that as described above, in the case in which the sub-content whose message destination is not specified is stored in the sub-content storage section 21 of the AV content creating device 11, the message destination information D14 is <message sendto = "[address]">. Then, the AV content creating device 22 incorporates the message destination into the sub-content whose message destination is not specified. Thus, the sub-content D 12 shown in Fig. 7 is obtained.

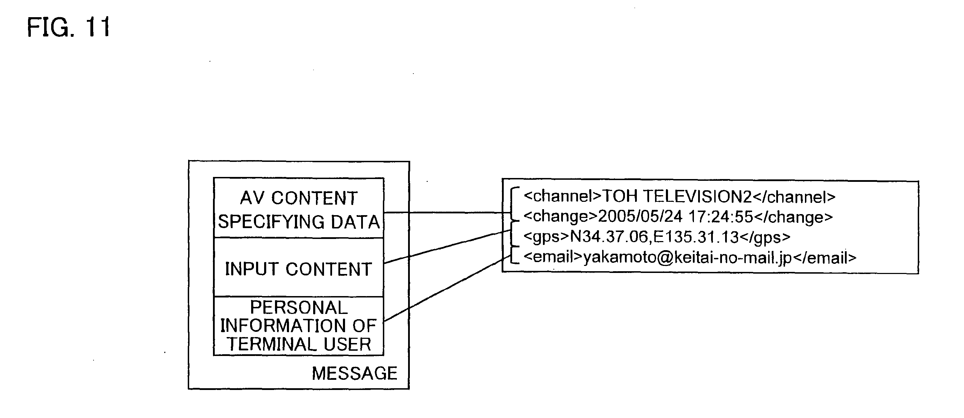

Fig. 11 shows a structure of a message created by the message creating section 55 of the mobile phone terminal 14, and one example of the message. As shown in Fig. 11, the channel information is written between the <channel> tag and the </channel> tag and the switched time information is written between the <change> tag and the </change> tag, as AV content specifying data (AV data identifying information) D 18. Moreover, the latitude/longitude information is written between the <gps> tag and the </gps> tag as the input content. Further, the message sender information is written between the <email> tag and the </email> tag as the personal information of a terminal user.

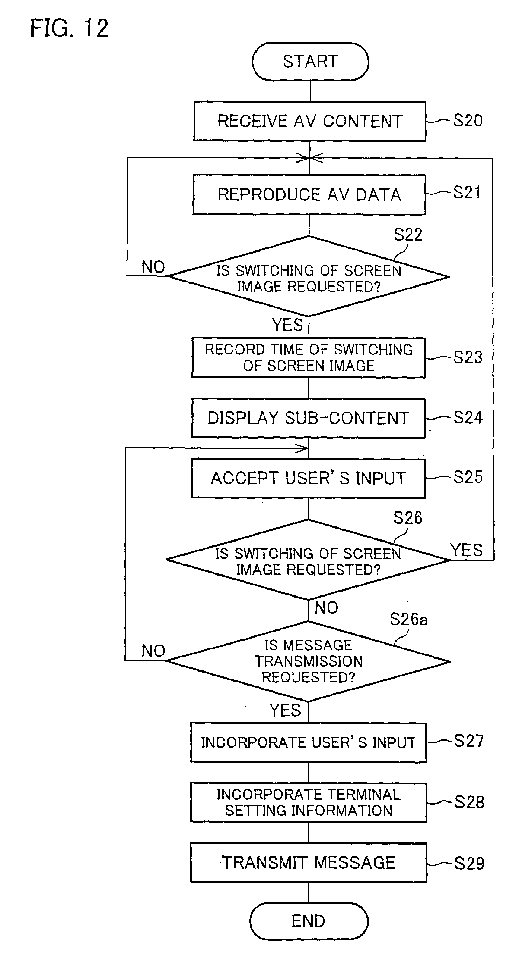

Fig. 12 shows processing operations carried out by the mobile phone terminal 14. As shown in Fig. 12, first, the AV content receiving section 44 receives the AV content (S20), and then the control section 40 reproduces the AV data included in the AV content (S21).

Next, the control section 40 judges whether or not the user has requested the switching of the screen image (S22). In the case in which the switching of the screen image is not requested (NO in S22), the process returns to Step S21 to repeat the above operations. In the case in which the switching of the screen image is requested (YES in S22), the control section 40 memorizes the time of switching of the screen image (S23), displays the search image screen of the sub-content (S24), and accepts user's input(s) (S25).

Next, the control section 40 judges whether or not the user has requested the switching of the screen image (S26). In the case in which the switching of the screen image is not requested (NO in S26), the process returns to Step S21 to repeat the above operations. In the case in which the switching of the screen image is requested (YES in S26), the control section 40 judges whether the user has requested message transmission (S26a).

In the case in which the message transmission is not requested (NO in S26a), the process returns to Step S25 to repeat the above operations. In the case in which the message transmission is requested (YES in S26a), the control section 40 incorporates the user's input into the model form of the message (S27) and also incorporates the terminal setting information and the latitude/longitude information (S28), so as to create a message. Then, the control section 40 transmits the created message (S29). After that, the process returns to Step S21 to repeat the above operations.

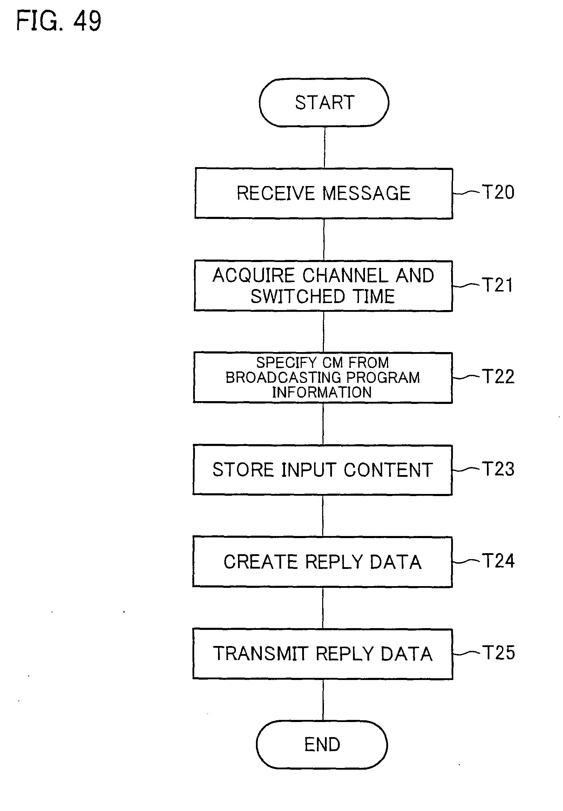

Fig. 49 shows processing operations carried out by the AV content related service providing device 15. Before carrying out the processing operations shown in Fig. 49, it is necessary that, in the AV content related service providing device 15, (i) the broadcasting program information receiving section 60 receive in advance the broadcasting program information from the AV content combining/transmitting device 12 and (ii) the broadcasting program information storage section 67 store the received broadcasting program information.

As shown in Fig. 49, first, the message receiving section 61 receives the message, created by the mobile phone terminal 14, through the communication network 16 (T20), and then the message analyzing section 62 analyzes the message to acquire the channel information and the screen image switched time information (T21). Next, the broadcasting program information judging section 63 specifies a CM in accordance with the channel information, the screen image switched time information, and the broadcasting program information stored in the broadcasting program information storage 67 (T22). Next, the input content storage section 64 stores the input content, such as the channel information and screen image switched time information acquired by the message analyzing section 62, in the database corresponding to the CM specified by the broadcasting program information judging section 63 (T23).

Next, the message replying section 66 creates the reply message corresponding to the CM specified by the broadcasting program judging section 63 (T24), and then transmits the created reply message through the communication network 16 to the mobile phone terminal 14 that is the sender of the message (T25). For example, in the case of the convenience store "NINE FIVE", as above, the shop information is searched for, and then the result is transmitted as the reply message. After that, the processing operations in the AV content related service providing device 15 are terminated.

### [Embodiment 2]

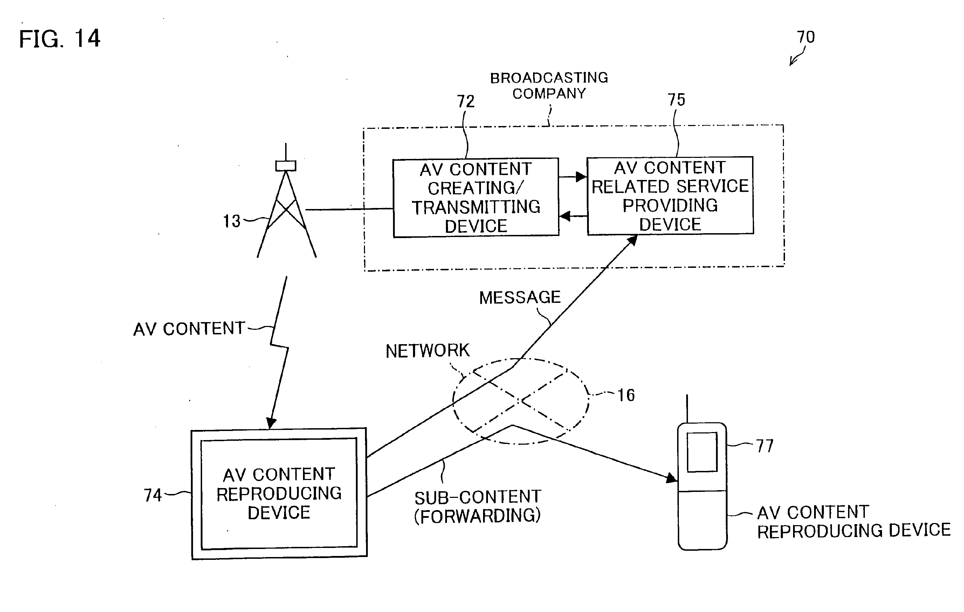

The following explains another embodiment of the present invention in reference to Figs. 14 to 24, Figs. 50 and 51. Fig. 14 shows a schematic arrangement of an interactive service system of the present embodiment. An interactive service system 70 provides a service which allows a user to answer a questionnaire (enquete) while watching a TV program, so as to take part in a prize competition. Note that the same reference numerals are used for the members having the same functions as the members used in Embodiment 1 and for the same processing operations as the processing operations explained in Embodiment 1, and further explanations thereof are omitted.

As shown in Fig. 14, the interactive service system 70 is arranged so that an AV content creating/transmitting device 72, a plurality of AV content reproducing devices (74, 77), an AV content related service providing device 75 are communicably connected with each other through the communication network 16. Moreover, the AV content reproducing device 74 has a function of receiving AV content from the AV content creating/transmitting device 72 through the relay station 13 to reproduce the AV content.

Note that the AV content creating/transmitting device 72 is used in the present embodiment instead of the AV content creating device 11 and the AV content combining/transmitting device 12 shown in Fig. 1. Moreover, in the present embodiment, a broadcasting company owns the AV content creating/transmitting device 72, the AV content related service providing device 75, and the relay station 13, and a viewer owns the AV content reproducing device 74 (77). Moreover, in Fig. 14, the AV content reproducing device 74 for receiving the AV content from the broadcasting company and reproducing the AV content is a TV broadcasting receiver.

The AV content creating/ transmitting device 72 creates the AV content including the broadcasting program-use AV data and the sub-content, and broadcasts the created AV content in a predetermined period of time through the relay station 13.

In the present embodiment, the AV data is streaming data, that is, the AV data received from the broadcasting company is reproduced in real time. Moreover, the sub-content includes (i) layout designating data for designating the display layout of the screen image, (ii) questionnaire data including the content of the questionnaire, (iii) destination data indicating a structure and destination of a message in the case in which an answer to the questionnaire is transmitted as the message, and (iv) data for specifying the AV data.

Therefore, after the AV content reproducing device 74 receives the AV content, the AV content reproducing device 74 displays a video of the TV program based upon the AV data and the content of the questionnaire based upon the questionnaire data in accordance with the designated display layout.

At this point, the viewer (the user of the AV content reproducing device 74) inputs an answer to the questionnaire, and then presses a submit button on the screen image. Thus, the AV content reproducing device 74 creates the message in accordance with data indicating the structure of the message. The message includes: information inputted by the user; the personal information (for example, an address, a name, etc.) set up in advance in the AV content reproducing device 74; and a broadcasting program ID and scene ID which are information for specifying a certain scene in a TV program. Then, the AV content reproducing device 74 transmits the created message in accordance with data indicating the destination (the AV content related service providing device 75 in the example shown in Fig. 14) of the message.

With this, the broadcasting company having the AV content creating/ transmitting device 72 and the AV content related service providing device 75 can collect the answer to the questionnaire about the TV program during or just after the broadcasting of the TV program.

Moreover, the sub-content of the AV content created by the AV content creating/ transmitting device 72 includes the destination data indicating that the destination is the AV content related service providing device 75. Therefore, the message from the AV content reproducing device 74 can be received by a device desired by the broadcasting company. As a result, the broadcasting company can directly collect feedbacks from the viewer about the broadcasting program, and directly provide to the viewer various services based upon the content of the message.

Moreover, because the user of the AV content reproducing device 74 needs not input the destination of the message, it is possible to cut out the need of input and prevent missending the message due to an inputting error.

Moreover, in the interactive service system 70 of the present embodiment, the AV content reproducing device 74 can transmit the sub-content in the AV content to an AV content reproducing device 77 through the communication network 16. As described above, the sub-content includes data (broadcasting program ID) for specifying the AV data.

Therefore, the AV content reproducing device which has received the sub-content can reproduce only the sub-content. Moreover, in the case in which the AV content reproducing device 77 has a function of receiving the AV data to reproduce the AV data, the AV content reproducing device 77 can reproduce the AV data in accordance with the sub-content. Note that in the example shown in Fig. 14, the AV content reproducing device 77 is a mobile phone terminal.

The following explains in detail respective members in the interactive service system 70 of the present embodiment.

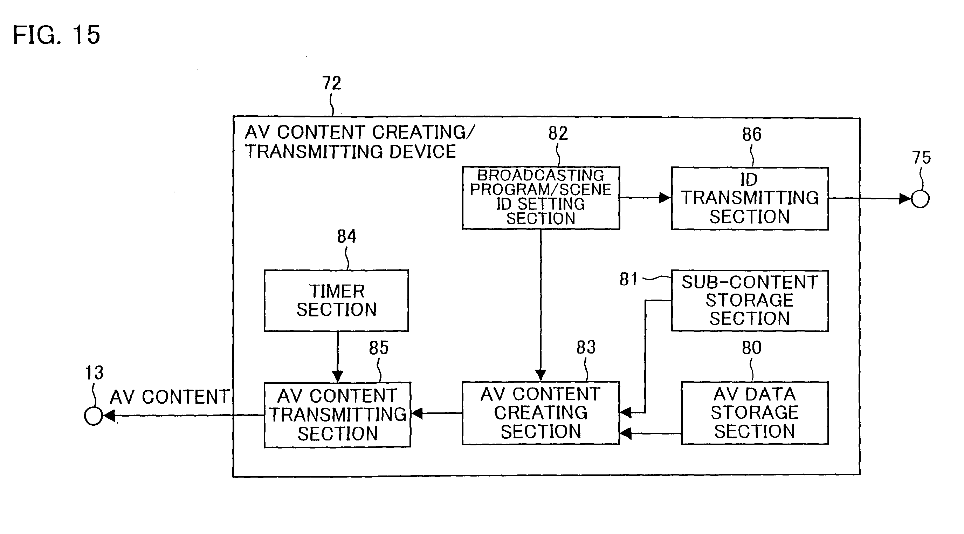

Fig. 15 shows a schematic arrangement of the AV content creating/transmitting device 72. As described above, the AV content creating device 72 creates the AV content including (i) the broadcasting program-use AV data to be reproduced as a video and audio of a TV program and (ii) the sub-content attached to the broadcasting program-use AV data. Then, the AV content creating/transmitting device 72 broadcasts the created AV content in a predetermined period of time through the relay station 13. As shown in Fig. 15, the AV content creating/transmitting device 72 is so arranged as to include an AV data storage section 80, a sub-content storage section 81, a broadcasting program/scene ID setting section 82, an AV content creating section 83, a timer section 84, an AV content transmitting section 85, and an ID transmitting section 86.

The AV data storage section 80 stores a set of or a plurality of sets of broadcasting program-use AV data created in advance by the broadcasting company. The sub-content storage section 81 stores various sub-content attached to the broadcasting program-use AV data, the sub-content being created in advance by the broadcasting company. The AV data storage section 80 and the sub-content storage section 81 include a memory device, such as a HDD (Hard Disc Drive). Note that details about the sub-content are described later.

The broadcasting program/scene ID setting section 82 sets up the broadcasting program ID for specifying a broadcasting program and the scene ID for specifying a scene in the broadcasting program. The broadcasting program/scene ID setting section 82 transmits the set up broadcasting program ID and scene ID to the AV content creating section 83 and the ID transmitting section 86. The ID transmitting section 86 transmits the broadcasting program ID and scene ID, received from the broadcasting program/scene ID setting section 82, to the AV content related service providing device 75.

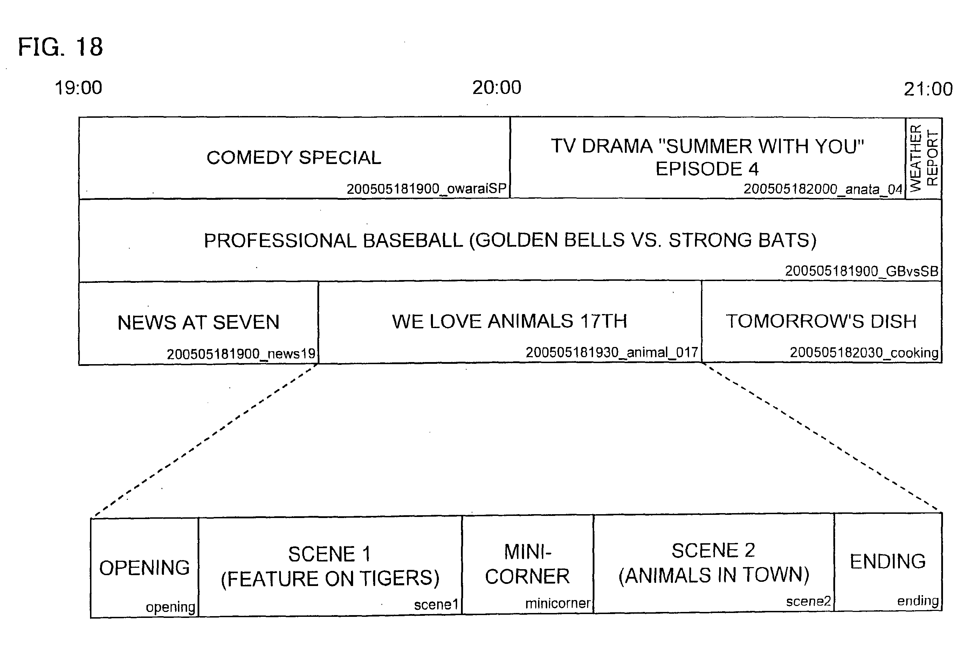

Fig. 18 shows one example of the broadcasting program IDs and scene IDs. Specifically, Fig. 18 shows broadcasting program titles and broadcasting program IDs of the broadcasting programs broadcasted on three different channels in a certain period of time (from 7 p.m. to 9 p.m.). Fig. 18 also shows scene names and scene IDs of scenes broadcasted in a certain broadcasting program. In the example shown in Fig. 18, the broadcasting program ID is shown by a combination of year, month, day, and an abbreviation of a broadcasting program title. Meanwhile, the scene ID is shown by an abbreviation of the scene name.

Note that there is a possibility that the broadcasting program ID is identical to a broadcasting program ID of the other channel. In such a case, however, the destination of the message to the broadcasting program of the other channel is a different broadcasting company, so that it is considered that this case is less likely to affect providing of the interactive service.

In Fig. 15, the AV content creating section 83 retrieves desired broadcasting program-use AV data from the AV data storage section 80, and also retrieves sub-content corresponding to the broadcasting program-use AV data from the sub-content storage section 81, so as to create the AV content including the broadcasting program-use AV data and the sub-content. Moreover, the AV content creating section 83 add to the sub-content of the AV content the broadcasting program ID and scene ID received from the broadcasting program/scene ID setting section 82. The AV content creating section 83 transmits the created AV content to the AV content transmitting section 85. The broadcasting program/scene ID setting section 82 and the AV content creating section 83 are realized by causing a CPU to execute a program stored in a memory device, such as a RAM, a flash memory, or the like.

The timer section 84 measures time. The timer section 84 transmits time information of measured time to the AV content transmitting section 85. The AV content transmitting section 85 transmits the AV content, received from the AV content creating section 83, to the relay station 13 in accordance with the time information received from the timer section 84. Thus, the AV content is broadcasted from the relay station 13.

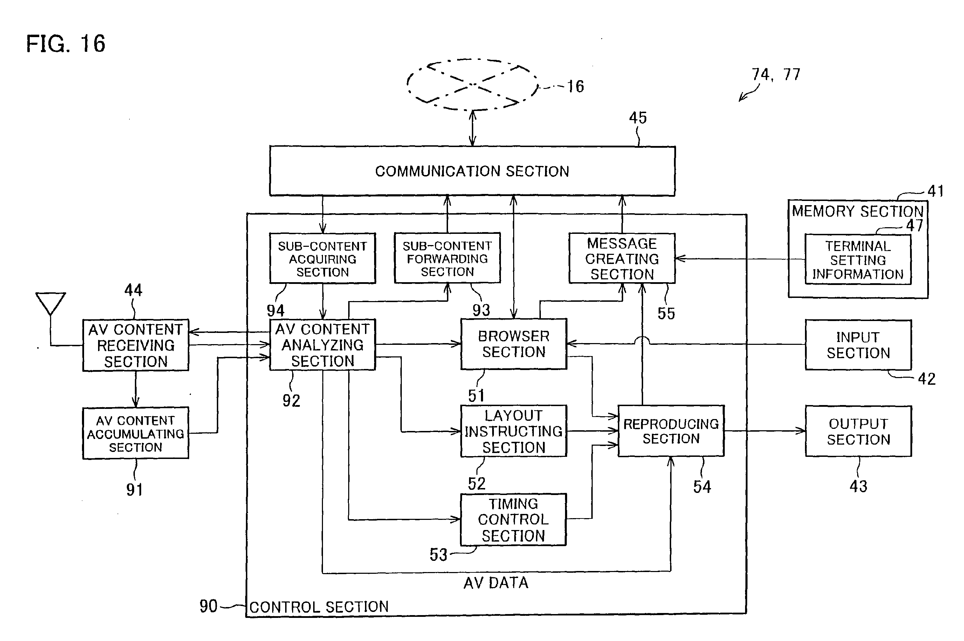

Fig. 16 shows a schematic arrangement of the AV content reproducing device 74 (77). The AV content reproducing device 74 (77) of the present embodiment is identical to the mobile phone terminal 14 shown in Fig. 4 except that (i) detailed members in a control section 90 are different, (ii) the positional information acquiring section 46 is omitted, and (iii) an AV content accumulating section 91 is added. Note that the same reference numerals are used for the members having the same functions as the members used in the above embodiments, and further explanations thereof are omitted.

The AV content accumulating section 91 accumulates the AV content received from the AV content creating/transmitting device 72. The AV content accumulating section 91 includes a large-capacity memory device, such as a HDD, a DVD (Digital Versatile Disk) drive, or the like.

The following explains details about the control section 90. The control section 90 of the present invention is identical to the control section 40 of the mobile phone terminal 14 shown in Fig. 4 except that (i) the AV content analyzing section 92 is arranged differently, (ii) the reply message acquiring section 56 is omitted, and (iii) a sub-content forwarding section 93 and a sub-content acquiring section 94 are added. Note that the same reference numerals are used for the members having the same functions as the members used in the above embodiments, and further explanations thereof are omitted.

The AV content analyzing section 92 analyzes the AV content acquired from the AV content creating/transmitting device 72 through the relay station 13 and the AV content receiving section 44. Specifically, the AV content analyzing section 92 identifies the AV data from the acquired AV content to transmit the AV data to the reproducing section 54. Moreover, the AV content analyzing section 92 identifies the sub-content from the acquired AV content, analyzes the sub-content, and gives various instructions to the browser section 51, the layout instructing section 52, and the timing control section 53 in accordance with an analysis result of the sub-content.

Moreover, the AV content analyzing section 92 transmits the identified sub-content to the sub-content forwarding section 93. Moreover, the AV content analyzing section 92 acquires the sub-content from the sub-content acquiring section 94 and analyzes the sub-content, so as to find out whether or not the AV data designated in the sub-content is available, specifically, whether or not the AV data is accumulated in the AV content accumulating section 91. In the case in which the AV data is accumulated in the AV content accumulating section 91, the AV content analyzing section 92 reads out the AV data from the AV content accumulating section 91, and then transmits the AV data to the reproducing section 54 as with the AV content acquired from the AV content creating/transmitting device 72. In addition the AV content analyzing section 92 gives various instructions to the browser section 51, the layout instructing section 52, and the timing control section 53 in accordance with an analysis result of the sub-content.

The sub-content forwarding section 93 transmits the sub-content, received from the AV content analyzing section 92, to a different AV content reproducing device through the communication section 45 and the communication network 16. Moreover, the sub-content acquiring section 94 acquires the sub-content from a different AV content reproducing device through the communication network 16 and the communication section 45. The sub-content acquiring section 94 transmits the acquired sub-content to the AV content analyzing section 92.

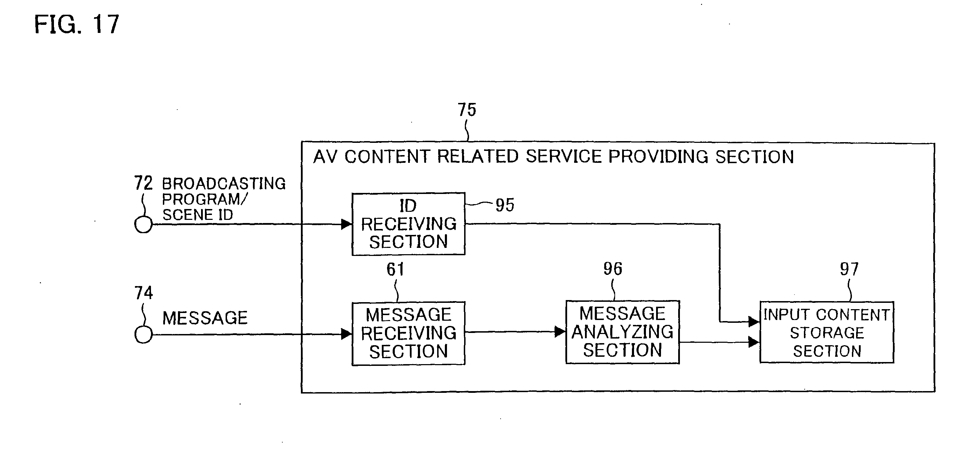

Fig. 17 shows a schematic arrangement of the AV content related service providing device 75. The AV content related service providing device 75 of the present embodiment is identical to the AV content related service providing device 16 shown in Fig. 5 except that (i) an ID receiving section 95 is provided instead of the broadcasting program information receiving section 60 and the broadcasting program information judging section 63, (ii) a message analyzing section 96 and an input content storage section 97 are different from the message analyzing section 62 and the input content storage section 64, respectively, and (iii) the shop information storage section 65 and the message reply section 66 are omitted. Note that the same reference numerals are used for the members having the same functions as the members used in the above embodiments, and further explanations thereof are omitted.

The ID receiving section 95 receives the broadcasting program ID and scene ID created by the AV content creating/transmitting device 72. The ID receiving section 95 stores the received broadcasting program ID and scene ID in the input content storage section 97.

The message analyzing section 96 analyzes the message received from the message receiving section 61. The message analyzing section 96 transmits to the input content storage section 97 various information included in the message. Specifically, the message analyzing section 96 transmits to the input content storage section 97 the broadcasting program ID, the scene ID, the input information from the viewer, and the terminal setting information.

The input content storage section 97 stores the broadcasting program ID and scene ID received from the ID receiving section 95 and the various information received from the message analyzing section 96. With this, the broadcasting company can find out (i) for which scene the message (questionnaire) received from the AV content reproducing device 74 is created, and (ii) what time the scene is broadcasted.

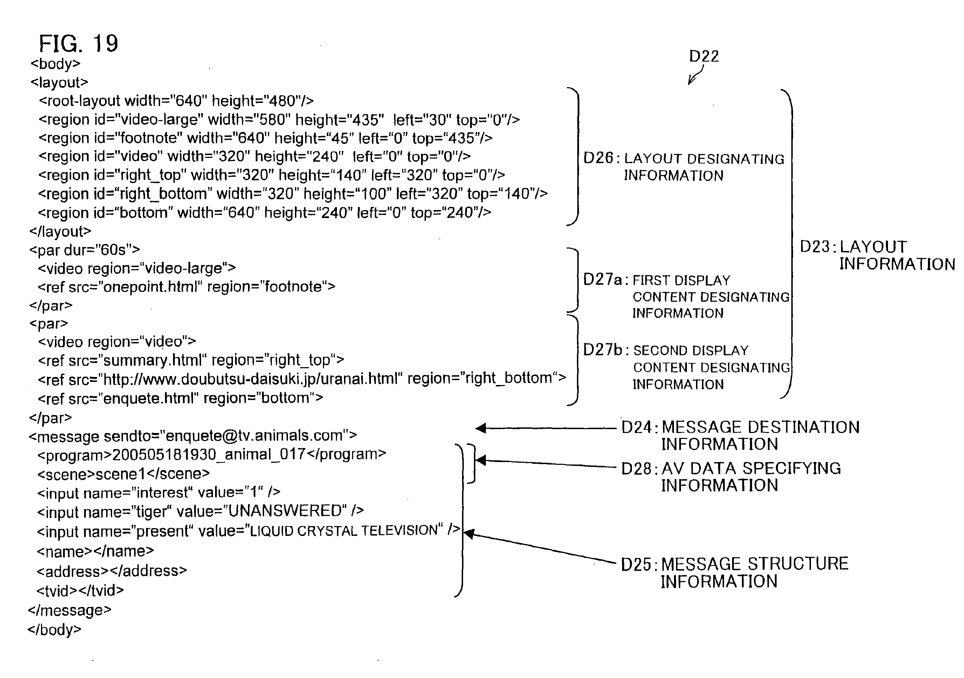

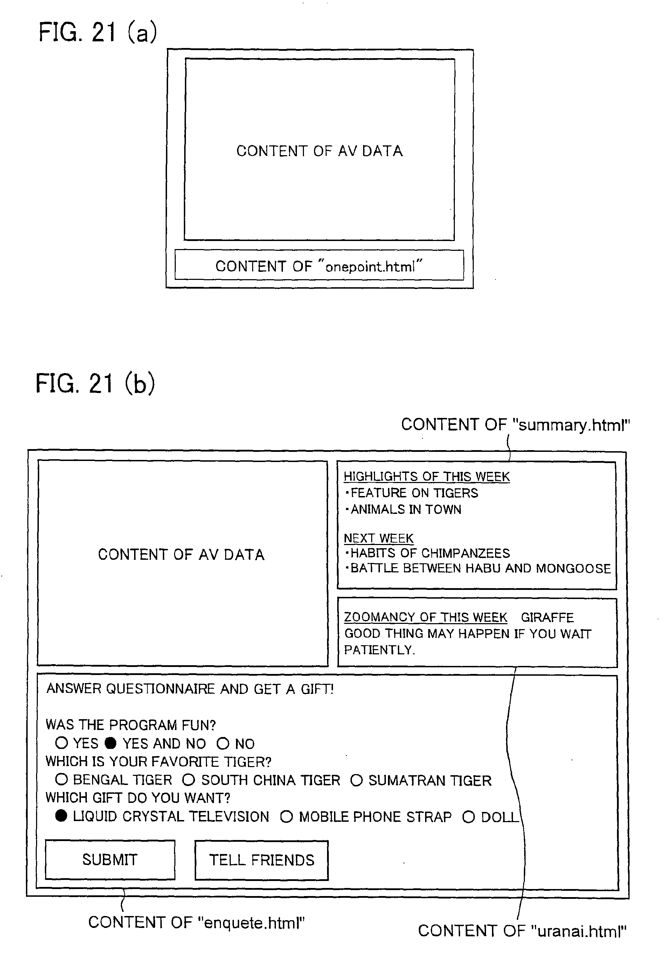

Fig. 19 is one example of sub-content D22, and Figs. 21(a) and 21(b) are display screen images displayed based upon the sub-content D22. Note that the data structure of the sub-content D22 is similar to that of the sub-content D12 shown in Fig. 6, and further explanations thereof are omitted. In addition, as with the sub-content D12 shown in Fig. 7, the sub-content D22 shown in Fig. 19 is written in XML, however the sub-content D22 can be written in any description format, such as HTML, XHTML or SMIL, or a combination thereof. Moreover, the example shown in Fig. 19 is simplified for an explanation of the present invention.

In the present embodiment, layout designating information D23 is written between a <layout> tag and a </layout> tag. According to examples shown in Figs. 19, 21(a), and 21(b), a screen of width 640 pixels × height 480 pixels (VGA (Video Graphics Array)) is divided into a large upper region of width 580 pixels × height 435 pixels and a small lower region of width 640 pixels × height 45 pixels.

Further, a screen of width 640 pixels × height 480 pixels is divided into an upper region of height 240 pixels and a lower region of height 240 pixels. The upper region is further divided into an upper left region of width 320 pixels on the left side of the screen and an upper right region of width 320 pixels on the right side of the screen. The upper right region is further divided into an upper right top region of height 140 pixels and an upper right bottom region of height 100 pixels. The layout designating information D23 designates the upper left region, the upper right top region, the upper right bottom region, and the lower region.

Moreover, first display content designating information D27a is written between a first <par> tag and a first </par> tag. According to the examples shown in Figs. 19 and 21(a), a video based upon the AV data is displayed in the large upper region, and the content of an HTML document "onepoint. html" is displayed in the small lower region. Note that 60 seconds is designated inside the first <par> tag as a time for displaying (dur = "60s").

Moreover, second display content designating information D27b is written between a second <par> tag and a second </par> tag. A display based upon the second display content designating information D27b is carried out after the display (60 seconds) based upon the first display content designating information D27a is carried out. According to the examples shown in Figs. 19 and 21(b), a video based upon the AV data is displayed in the upper left region, the content of an HTML document "summary. html" is displayed in the upper right top region, the content of an HTML document "uranai. html" is displayed in the upper right bottom region, and the content of an HTML document "enquete. html" is displayed in the lower region.

Note that the HTML documents "summary. html" and "enquete. html" are included in the sub-content D22. However, only an URL of the HTML document "uranai. html" is written here. On this account, the AV content reproducing device 74 needs to acquire the HTML document "uranai. html" from outside through the communication network 16.

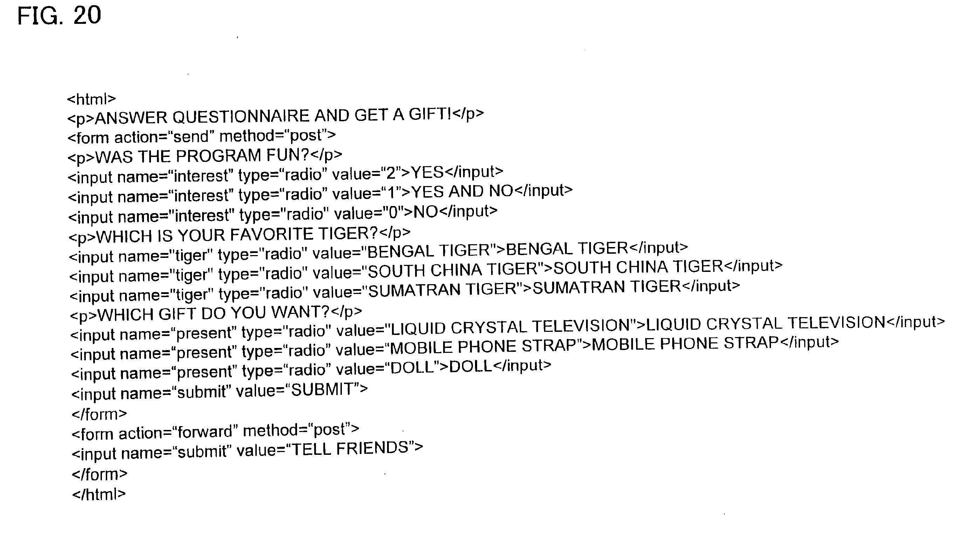

Fig. 20 shows one example of the HTML document "enquete. html". As shown in Fig. 20, the content of the questionnaire, an operation carried out when a "SUBMIT" button is selected, and an operation carried out when a "TELL FRIENDS" button is selected are written in the HTML document "enquete. html". When the "SUBMIT" button is selected, a message is created. Meanwhile, when the "TELL FRIENDS" button is selected, sub-content is forwarded.

In Fig. 19, message destination information D24 is written inside a <message> tag, and message structure information D25 is written between the <message> tag and a </message> tag. In the present embodiment, information between the <message> tag and the </message> tag is a model form of a message.

In the example shown in Fig. 19, an e-mail address of the AV content related service providing device 75 is written inside the <message> tag as the message destination information D24. Moreover, a <program> tag, a </program> tag, a <scene> tag, a </scene> tag, <input> tags, a <name> tag, a </name> tag, an <address> tag, an </address> tag, a <tvid> tag, and a </tvid> tag are written between the <message> tag and the </message> tag.

The broadcasting program ID for specifying a TV program is written between the <program> tag and the </program> tag, and the scene ID for specifying a scene is written between the <scene> tag and the </scene> tag. These tags are written in advance in the sub-content D22.

In addition, the answers inputted by the viewer are written inside the <input> tags, the name of the viewer is written between the <name> tag and the </name> tag, the address of the viewer is written between the <address> tag and the </address> tag, and a terminal ID for specifying the terminal (the AV content reproducing device 74 (77)) of the viewer is written between the <tvid> tag and the </tvid> tag. Note that the information inside the <input> tags are written by the viewer answering to the questionnaire and selecting the "SUBMIT" button. In addition, the information between the <name> tag and the </name> tag, the <address> tag and the </address> tag, and the <tvid> tag and the </tvid> tag are written when creating the message.

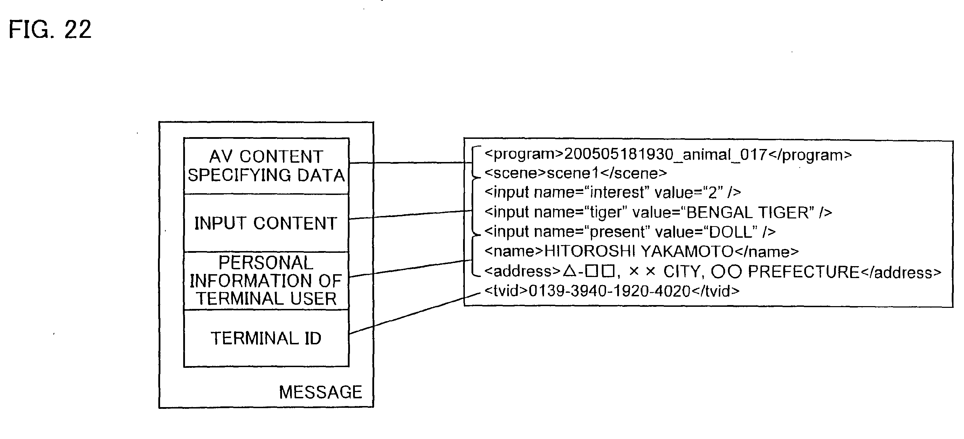

Fig. 22 shows a structure of a message created by the message creating section 55 of the AV content reproducing device 74 and one example of the message. As shown in Fig. 22, the broadcasting program ID is written between the <program> tag and the </program> tag and the scene ID is written between the <scene> tag and the </scene> tag, as AV content specifying data D28. Moreover, the answers to the questionnaire are written inside the <input> tags as the input content. Further, the name of the viewer is written between the <name> tag and the < / name> tag as the personal information of the terminal user, and the address of the viewer is written between the <address> tag and the </address> tag. Then, the terminal ID is written between the <tvid> tag and the </tvid> tag.

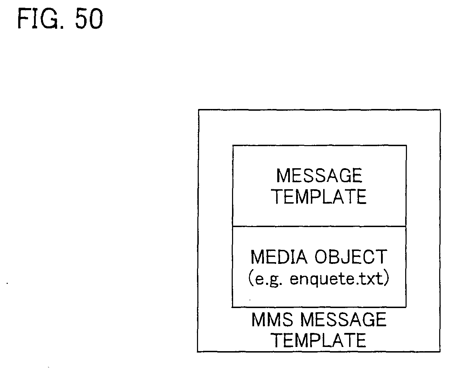

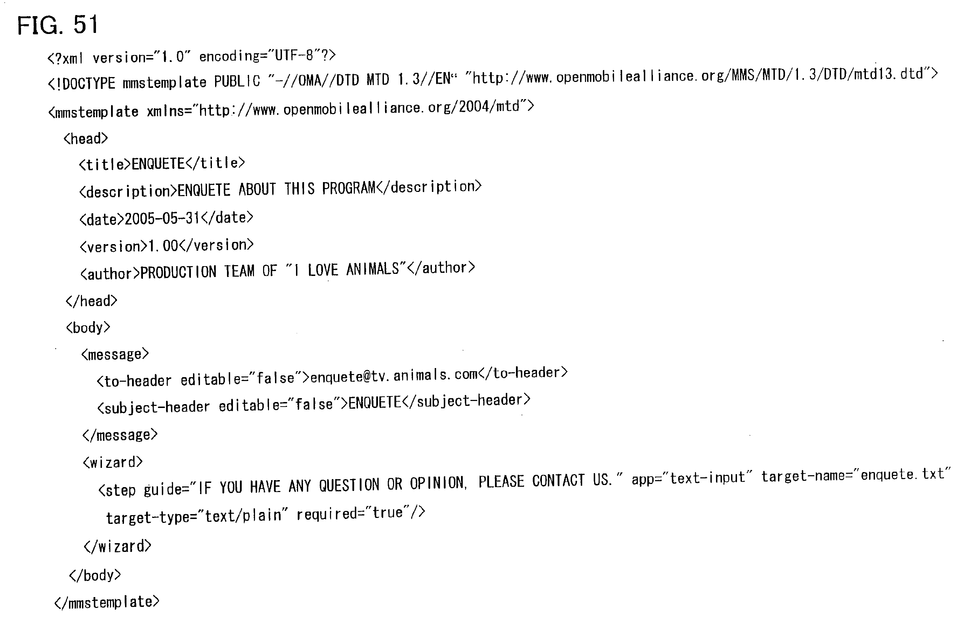

Here, as an exemplary description of the sub-content, the following deals with a case of using an MMS (Multimedia Messaging Service) message template, with reference to Figs. 50 and 51.

Fig. 50 shows a structure of the sub-content using the MMS message template. As shown in the figure, the MMS message template includes a message template and a media object. The message template includes: its metadata which is the title or explanation of the template; data for determining header information such as a destination or the title of the message; and data related to a message creating method.

Fig. 51 shows an exemplary script of the message template. In the example, the metadata of the message template itself is written between the <head> tag and the </head>tag. Further, the data for determining the header information of the message is written between the <message> tag and </message> tag. Between these tags, the destination of the message is written between the <to-header> tag and the </to-header> tag. Further, the method of creating a message is designated between the <wizard> tag and the </wizard> tag. Between these tags, a method of replacing the media object is designated between the <step> tag and the </step> tag.

According to the message template shown in Fig. 51, the AV content reproducing device 74 replaces the media object with another media object, and the MMS message template containing the replaced media object and the message template can be transmitted as a message to the AV content related service providing device 75 or other devices. In other words, the AV content reproducing device 74 is able to replace the original media object with input text data (i.e., "enquet.txt" file), and transmit as a message, the MMS message template including the replaced "enquete.txt" to address "enquete@tv.animals.com".

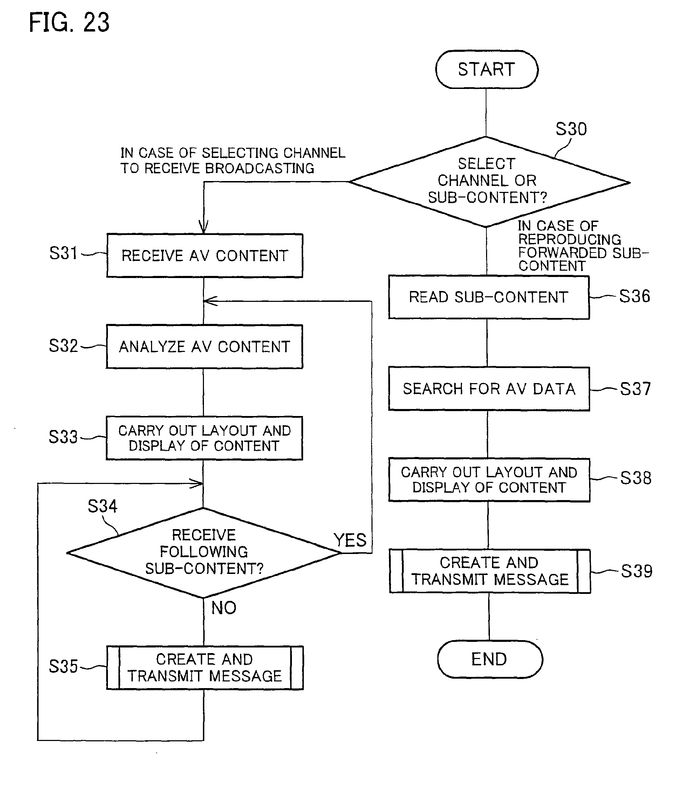

Fig. 23 shows processing operations carried out by the AV content reproducing device 74 (77). As shown in Fig. 23, the control section judges whether to select a channel to receive a broadcast or to reproduce the forwarded sub-content (S30).

In the case of selecting a channel, the content receiving section 44 receives the AV content (S31), the AV content analyzing section 92 analyzes the AV content (S32), and a layout and display of the AV content is carried out based upon an analysis result of the AV content (S33).

Next, the control section 90 judges whether or not following sub-content is received (S34). In the case in which the following sub-content is received (YES in S34), the process returns to Step S32 to repeat the above operations. Meanwhile, in the case in which the following sub-content is not received (NO in S34), a creation and transmission of a message are carried out (S35). After that, the process returns to Step S34 to repeat the above operations. Note that details about the processing operations of creation and transmission of the message are described later.

Meanwhile, in the case of reproducing the sub-content, the control section 90 reads the sub-content (S36), searches the AV content accumulating section 91 for AV data corresponding to the sub-content (S37), and carries out the layout and display of AV content including the searched AV data and the sub-content (S38). Then, the creation and transmission of the message is carried out (S39), and thereafter the processing operations are completed.

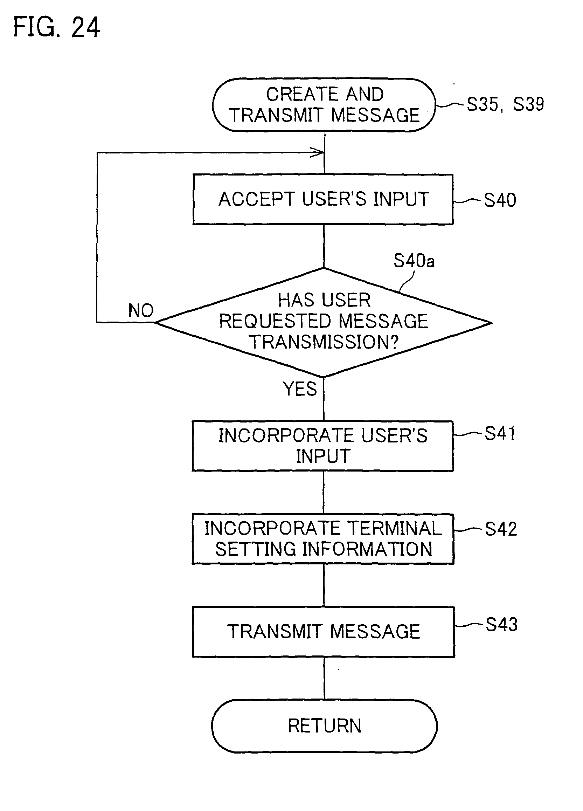

Fig. 24 shows processing operations (S35, S39) for creating and transmitting a message. As shown in Fig. 24, first, the control section 90 accepts user's input(s) (S40). Next, the control section 40 judges whether or not the user has requested message transmission (S40a).

In the case in which the message transmission is not requested (NO in S40a), the process returns to Step 40 to repeat the above operations. Meanwhile, in the case in which the message transmission is requested (YES in S40a), the user's input is incorporated into the model form of the message (S41), the terminal setting information is also incorporated (S42) to create the message, and then the created message is transmitted (S43). After that, the process returns to an original processing routine.

Note that the AV data corresponding to the sub-content is retrieved from the AV content accumulating section 91, however it is also possible to receive from the AV content receiving section 44 the AV data having the broadcasting program ID identical to that of a currently broadcasted program. In this case, the AV content reproducing device 74 needs to acquire the broadcasting program ID and scene ID of the AV data in one way or another. The method for acquiring the broadcasting program ID and scene ID of the AV data is exemplified by a method in which the AV content creating/transmitting device 72 transmits the AV data including the broadcasting program ID and the scene ID, and a method in which the broadcasting program ID and the scene ID are transmitted from the ID transmitting section 86 of the AV content creating/ transmitting device 72 to the AV content reproducing device 77 through the communication network 16.

Moreover, the AV content reproducing device 77 reproduces the sub-content forwarded from the AV content reproducing device 74 in the present embodiment. However, because of the difference in screen resolution between the AV content reproducing devices 74 and 77, there is a possibility that the AV content reproducing device 77 cannot display the sub-content with a display size specified in the sub-content. In this case, the AV content reproducing device 77 may reduce the display size while maintaining a horizontal to vertical ratio so as to display the sub-content, or may display only a part of the sub-content.

As described above, the AV data corresponding to the sub-content is retrieved from the AV content accumulating section 91 in Step S37. However, there may be a case in which the appropriate AV data cannot be found or the AV data is unavailable for some reason. In such a case, it is considered that (i) the display based upon the AV data is not carried out, or (ii) the display indicating that the AV data is unavailable is carried out in a region where the AV data should be displayed, and only the sub-content is displayed.

Further, in the present embodiment, the AV content creating/transmitting device 72 transmits the AV data and sub-content as the AV content to the AV content reproducing device 74 using the same broadcasting wave. However, it is possible to transmit the AV data and sub-content to the AV content reproducing device 74 via separate communication paths.

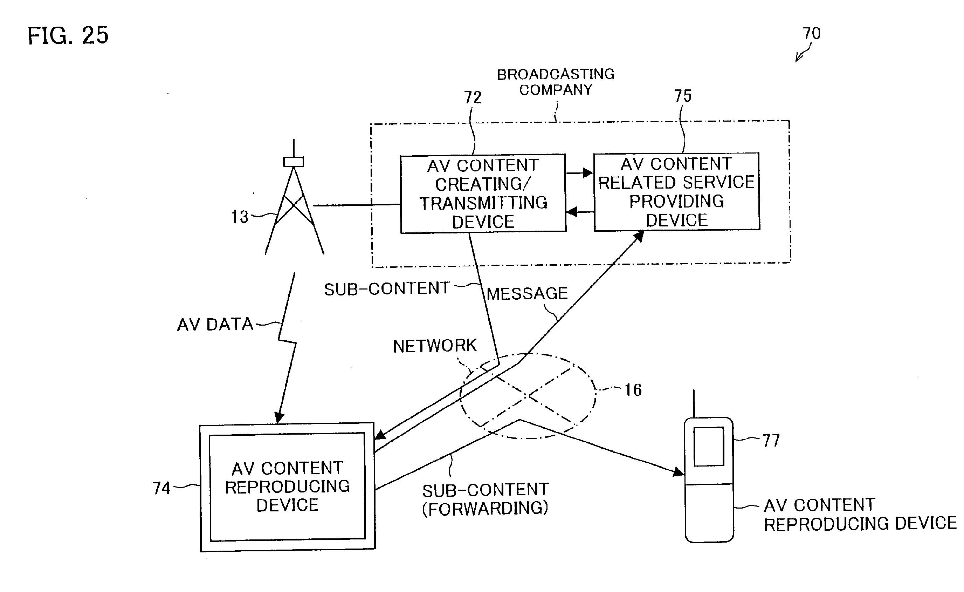

Fig. 25 shows an alternative example where the AV content creating/transmitting device 72 transmits, to the AV content reproducing device 74, AV data and sub-content constituting the AV content via separate communication paths. In the example, the AV content creating/transmitting device 72 transmits the AV data to the AV content reproducing device 74 from a base station 13 in the form of a broadcasting wave, while transmitting the sub-content to the AV content reproducing device 74 via the communication network 16.

The AV content reproducing device 74 shown in Fig. 25 is the same as that shown in Fig. 16 except in that: the AV content receiving section 44 receives the AV data; the AV content accumulating section 91 accumulates the AV data; and the sub-content acquiring section 94 acquires the sub-content from the AV content creating/transmitting device 72, via the communication network 16 and the communication section 45.

With the above configuration, the AV data and sub-content in the AV content are transmitted via separate communication paths. Therefore, the communication path is less burdened than a conventional case. Further, even if one of the communication paths can not be used, the AV data and sub-content can be transmitted via another one of the communication path.

Here, the sub-content acquiring section 94 may acquire the sub-content at a different timing from that at which the AV content receiving section 44 receives the AV data. In this case, the AV data and sub-content respectively received at different timings needs to be synchronized. This is done by searching, from the AV content accumulating section 91, the AV data corresponding to the sub-content acquired by the sub-content acquiring section 94, in a similar way to the steps S36 to S38 shown in Fig. 23. Alternatively, if the sub-content acquired by the sub-content acquiring section 94 includes a broadcasting program ID, the AV content receiving section 44 is able to synchronize, with the sub-content, the AV data of the broadcasting program indicated by the broadcasting program ID, in a period of time during which the broadcasting program is broadcast.

Further, the AV content creating/ transmitting device 72 may transmit the sub-content to the AV content reproducing device 74, without receiving a request for the sub-content from the AV content reproducing device 74. This is convenient for a user of the AV content reproducing device 74, because the AV content reproducing device 74 does not have to send the request for the sub-content to the AV content creating/transmitting device 72.

Moreover, the broadcasting program ID and the scene ID are utilized as the AV content specifying data D28, however it is also possible to utilize part of the video or part of the audio in the AV content. In the case of utilizing part of the video, a <screen/> tag which indicates an attachment of part of the video to the message is utilized in the AV content specifying data D28 shown in Fig. 19. Moreover, in the case of utilizing part of the audio, an <audio/> tag which indicates an attachment of the audio in a predetermined period to the message is utilized in the AV content specifying data D28.

Moreover, in the case of utilizing part of the video or part of the audio, the interactive service system of the present embodiment may be arranged as follows. That is, in the AV content creating/transmitting device 72 shown in Fig. 15, the ID transmitting section 86 acquires the AV content from the AV content creating section 83 instead of acquiring the broadcasting program ID and the scene ID from the broadcasting program/scene ID setting section 82, and then transmits the AV content to the AV content related service providing device 75.

Moreover, in the AV content reproducing device 74 shown in Fig. 16, the reproducing section 54 transmits, to the message creating section 55, video data of the AV content at a certain time point or audio data of the AV content in a predetermined time period starting from a certain time point. The message creating section 55 attaches the video data or the audio data to the created message, and transmits to the AV content related service providing device 75 through the communication section 45 and the communication network 16.

Moreover, in the AV content related service providing device 75 shown in Fig. 17, the ID receiving section 95 receives the AV content from the AV content creating/transmitting device 72, and transmits the received AV content to the message analyzing section 96. The message analyzing section 96 searches the AV content, obtained from the ID receiving section 95, by using, as a key, the video data and audio data attached to the message from the AV content reproducing device 74, and specifies the broadcasting program and the scene from the search result. With this, it is possible to find out (i) for which scene the message received from the AV content reproducing device 74 is created, and (ii) what time the scene is broadcasted.

Further, the present embodiment deals with a case where the AV content creating/transmitting device 72 broadcasts the AV data and sub-content as the AV content at the same time. However, it is possible to broadcast the AV data and sub-content at different timings (in a non-synchronized manner).

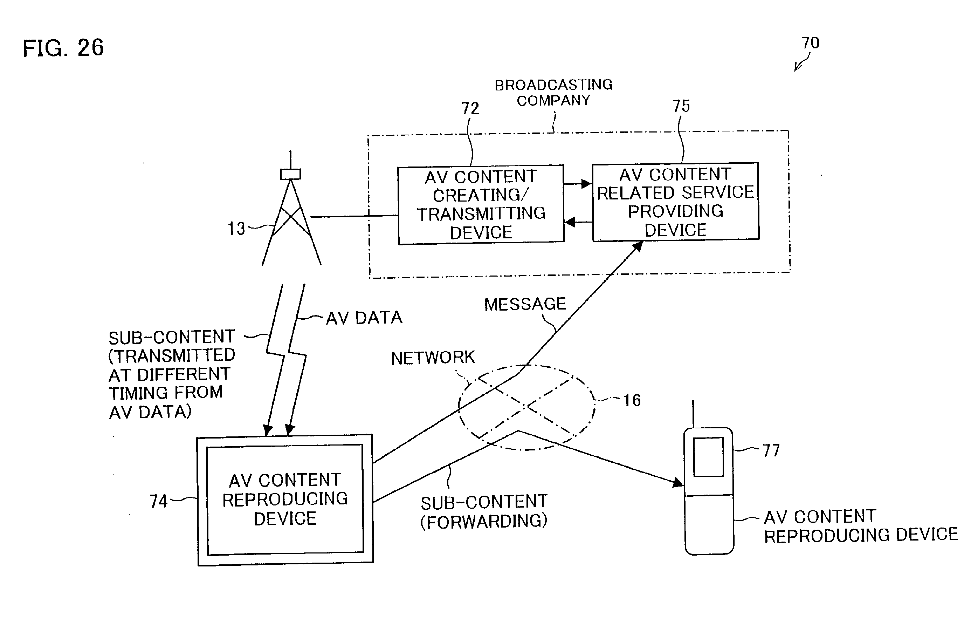

Fig. 26 shows an alternative example where the AV content creating/ transmitting device 72 broadcasts, via a base station 13, the AV data and sub-content constituting AV content, using the same broadcasting wave at different timings, respectively.

In the example, the AV content creating/transmitting device 72 transmits the AV data and sub-content to the AV content reproducing device 74, via the same communication path. In other words, the AV content creating/transmitting device 72 transmits the AV data and sub-content via the base station 13, in the form of broadcasting wave. On the other hand, the AV content creating/transmitting device 72 transmits the AV data and sub-content to the AV content reproducing device 74 at different timings.

The AV content reproducing device 74 shown in Fig. 26 is the same as that shown in Fig. 16, except in that: the AV content receiving section 44 receives the AV data and sub-content at different timings; and the AV content accumulating section 91 accumulates the AV data or sub-content.

In the present alternative example, the AV content reproducing device 74 needs to synchronize the AV data and sub-content respectively received at different timings. This is done by searching, from the AV content accumulating section 91, the AV data corresponding to the sub-content acquired by the AV content receiving section 44(Fig. 16). Alternatively, if the sub-content acquired by the AV content receiving section 44 includes a broadcasting program ID, the AV content receiving section 44 is able to synchronize, with the sub-content, the AV data of the broadcasting program indicated by the broadcasting program ID, in a period of time during which the broadcasting program is broadcast.

The sub-content is transmitted at a different timing from the AV data. The timing of transmitting the sub-content can be suitably selected. For example, the sub-content may be transmitted in such a manner that the transmission of sub-content does not overlap transmission of the AV data. In this case, it is possible to save the broadcasting band while broadcasting the AV data.

Further, it is possible to include the sub-content in EPG (Electronic Program Guide) data, and transmit the data prior to transmission of the AV data. In this case, the AV content reproducing device 74 is set so that, when the user selects a broadcasting program refereeing to the EPG, the sub-content corresponding to the broadcasting program is reproduced. That way, the broadcasting program and the sub-content are associated with each other. Further, various services such as interactive services written in the sub-content may be provided at a different timing from the time when the content is provided.

Here, as shown in Fig. 26, when the AV content creating/transmitting device 72 broadcasts the sub-content to the AV content reproducing device 74, the AV content reproducing device 74 does not need a request for the sub-content to the AV content creating/transmitting device 72. This is convenient for a user of the AV content reproducing device 74.

Further, in the present embodiment, the AV content reproducing device 74 performs displaying based on the sub-content D22 shown in Figs. 21(a) and 21(b), irrespective of the state of the AV content reproducing device 74. However, it is possible to change the displaying depending on the state of the AV content reproducing device 74. Here, examples of the state of the AV content reproducing device 74 are: date or time set in the AV content reproducing device 74; personal information input beforehand in the AV content reproducing device 74; viewing-contract information of a broadcasting program or a channel; information regarding whether or not a broadcasting program has been already viewed. The state information of the AV content reproducing device 74 is stored as the terminal setting information 47 of the memory section 41.

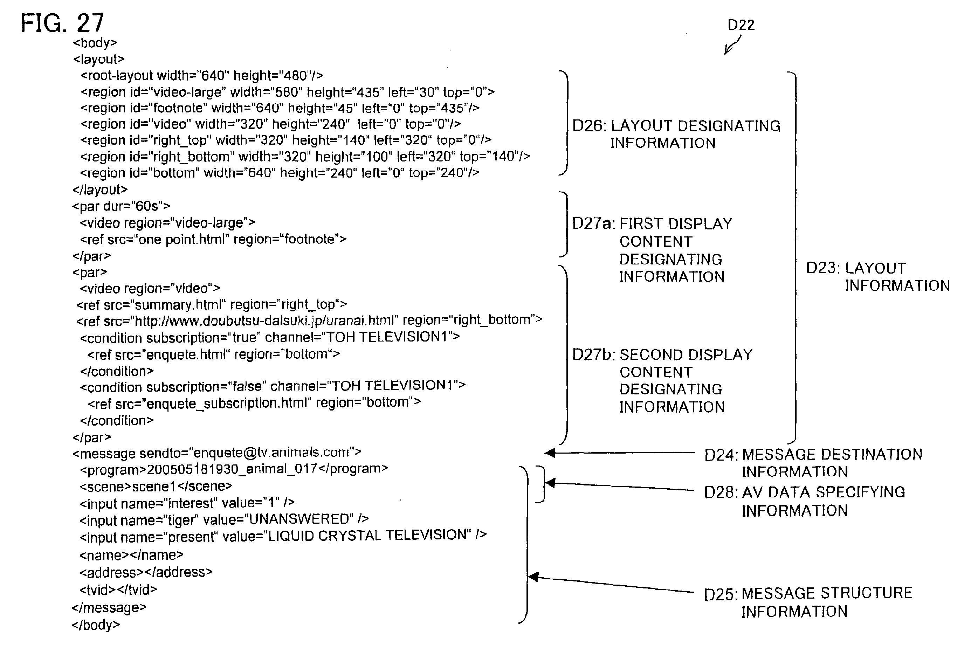

Fig. 27 shows an example of the sub-content to be displayed which content is changed depending on the state of the AV content reproducing device 74. The sub-content D22 of Fig. 27 is the same as the sub-content D22 of Fig. 19, except in that the sub-content of D22 is additionally given the <condition> and </condition> tags in second display content designating information D27b, which tags instruct switching of display content of sub-content D22 based on the state of the AV content reproducing device 74.

In the <condition> tag, a condition is written to be satisfied by the terminal setting information 47 stored in the memory section 41 of the AV content reproducing device 74. Between <condition> and </condition> tags, an operation to be executed when the condition is satisfied is written. In the example of Fig. 27, the given condition is whether or not the user's AV content reproducing device 74 is authorized by "TOH Television 1". If the AV content reproducing device 74 is authorized, the AV content reproducing device 74 displays content of HTML document "enquete.html" (See Fig. 20) at a lower region of the display screen. If not, the AV content reproducing device 74 displays the content of HTML document "enquete_subscription.html" at the lower region of the display screen.

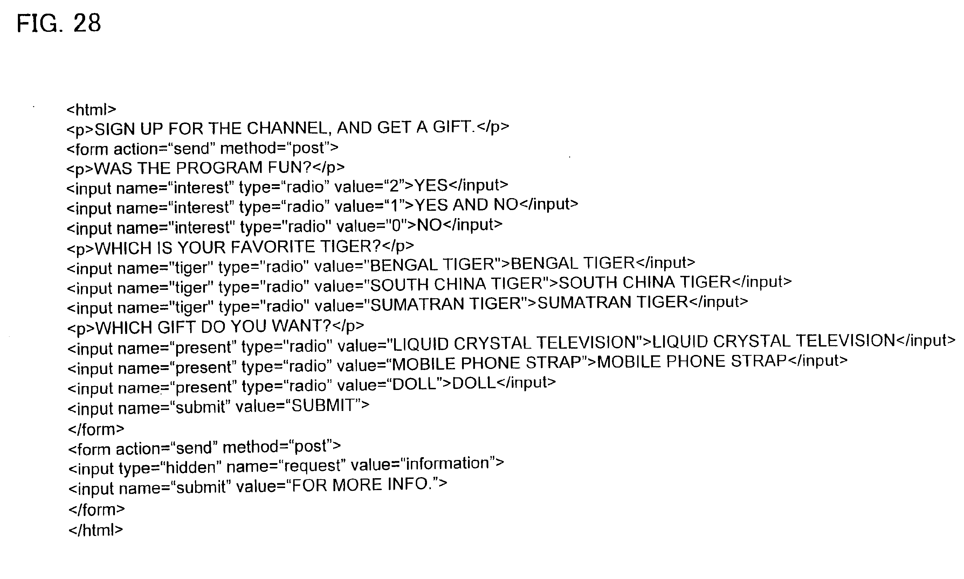

Fig. 28 shows an example of the HTML document "enquete_subscription.html". The example is the same as the HTML document "enquete.html" shown in Fig. 20, except in that the description corresponding to the content of HTML document "enquete_subscription.html" inducing the viewer to answer the enquete is written differently; and descriptions of "Request information" button and its operation is provided in place for the description of the "Tell your friends" button and its operation. When the "Request information" button is pressed, a message for requesting information is created.

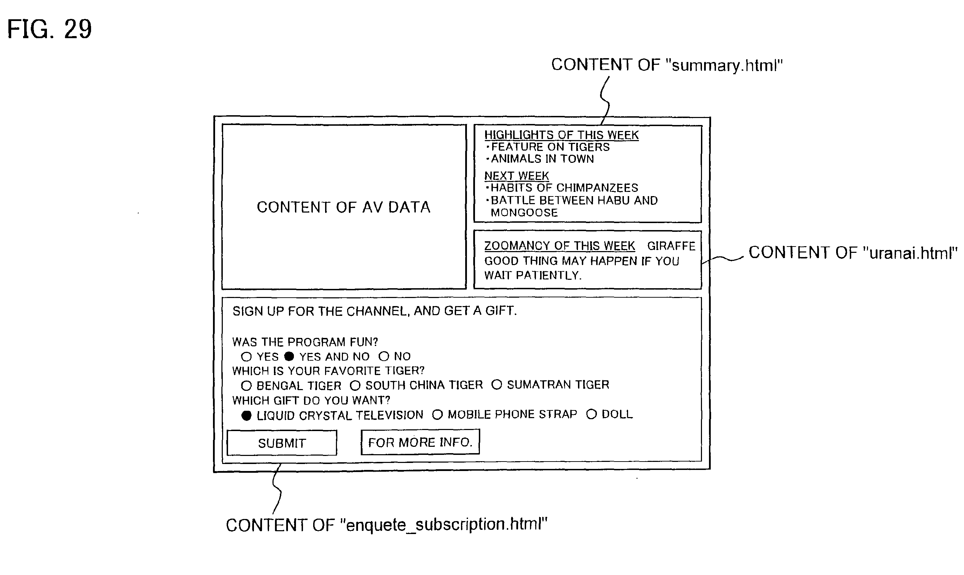

Fig. 29 shows a displayed screen image based on the sub-content D22 shown in Fig. 27, when the AV content reproducing device 74 is not authorized. In this case, the "Request information" button or the like is displayed in the lower region of the display screen, as shown in the figure.

Accordingly, by acquiring the sub-content D22 shown in Fig. 27, the AV content reproducing device 74 displays the screen image of Fig. 21 (b) if the AV content reproducing device 74 is authorized, and displays the screen image of Fig. 29 if the AV content reproducing device 74 is not authorized. In short, the displayed sub-content is changed based on the state of the AV content reproducing device 74.

Thus, it is possible to provide services specialized for each user of the AV content reproducing device 74. Further, since there is no need for separately transmitting different sub-content depending on the date and hour, it is possible to efficiently distribute sub-content even in a case of changing the sub-content to be displayed based on the date and hour.

Note that the condition in the <condition> tag can be various conditions other than the above described condition of authorization in relation to a particular channel. For example, the condition can be: whether or not a particular date and time has passed; whether or not the user is not younger than a particular age; whether or not the corresponding broadcasting program has been viewed, and so on.

Further, in the present embodiment, the message is an e-mail, and the destination of the message is an e-mail address. However, as mentioned above, the message may be a request made on WWW. In this case, the destination of the message is an URL of WWW.

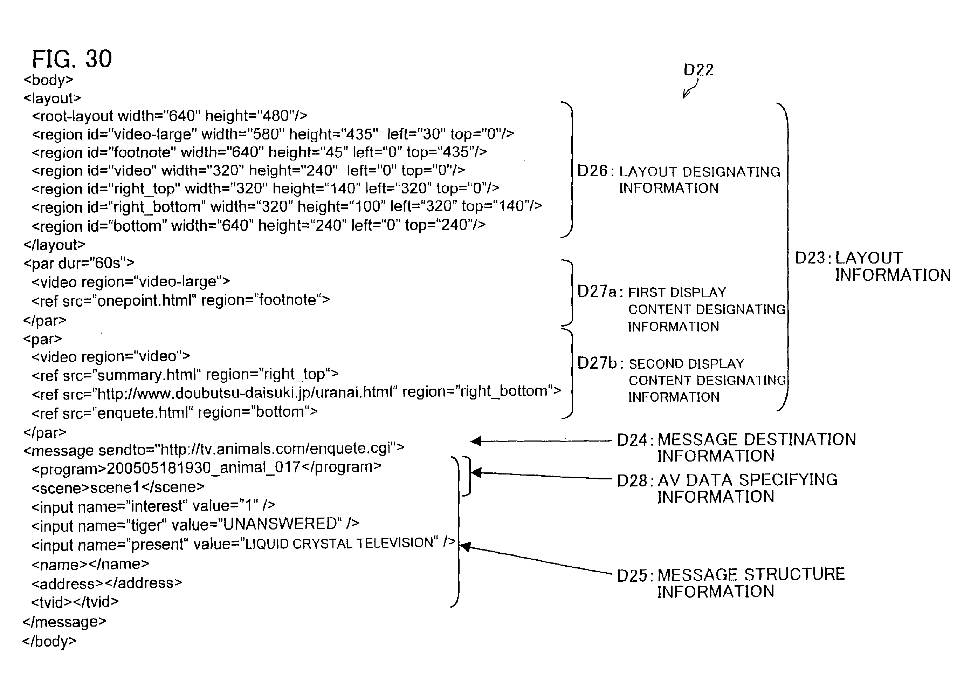

Fig. 30 shows sub-content of a case where the message is a request made on WWW. The sub-content D22 shown in the figure is the same as that shown in Fig. 19, except in that URL (http://tv.animals.com/enquete.cgi) of WWW is written as the message destination information D24, in place of an e-mail address.

### (Embodiment 3)

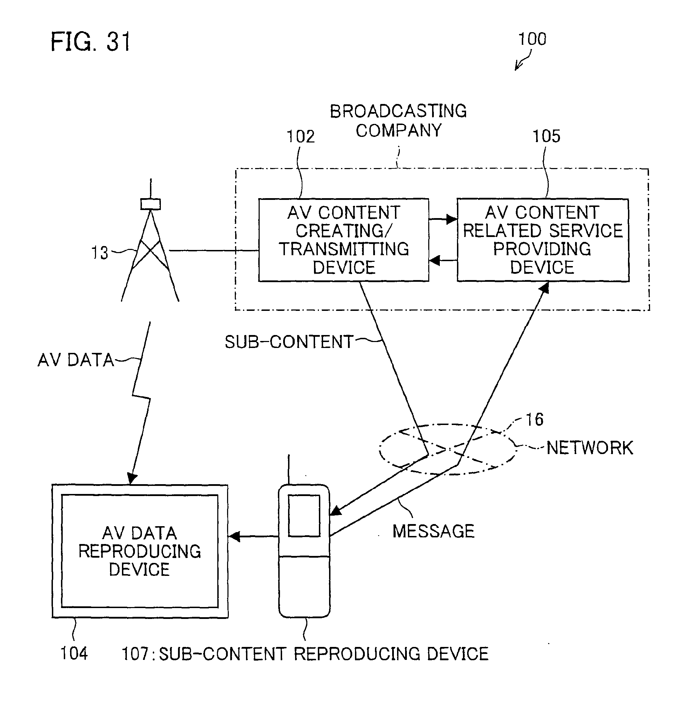

The following explains still another embodiment of the present invention in reference to Figs. 31 to 41. Fig. 31 shows a schematic arrangement of an interactive service system of the present embodiment. An interactive service system 100 provides a service which allows a user to answer a quiz of a live quiz show to take part in a prize competition by using a mobile phone terminal. Note that the same reference numerals are used for the members having the same functions as the members used in the above embodiments and for the same processing operations as the processing operations explained in the above embodiments, and further explanations thereof are omitted.

As shown in Fig. 31, the interactive service system 100 is arranged so that an AV content creating/transmitting device 102 and an AV content related service providing device 105 are communicably connected with each other, and the AV content creating/transmitting device 102 and the AV content related service providing device 105 are communicably connected with a sub-content reproducing device 107 through the communication network 16. Moreover, an AV data reproducing device 104 has a function of receiving AV data from the AV content creating/transmitting device 102 through the relay station 13 to reproduce the AV data.

In the present embodiment, a broadcasting company owns the AV content creating/transmitting device 102, the AV content related service providing device 105, and the relay station 13, and a viewer owns the AV data reproducing device 104 and the sub-content reproducing device 107. Moreover, in an example shown in Fig. 25, the AV data reproducing device 104 which receives the AV data from the broadcasting company to reproduce the AV data is a TV broadcasting receiver, and the sub-content reproducing device 107 which receives the sub-content from the broadcasting company to reproduce the sub-content is a mobile phone terminal.

Note that the interactive service system of the present embodiment is widely different from the interactive service system shown in Fig. 14 in that (i) a path for transmission of the AV data and a path for transmission of the sub-content attached to the AV data are provided separately, and (ii) the AV data and the sub-content are transmitted to the AV data reproducing device 104 and the sub-content reproducing device 107, respectively.

The AV content creating/transmitting device 102 broadcasts the AV data in a predetermined period of time though the relay station 13, and transmits the sub-content at an appropriate time to the sub-content reproducing device 107 through the communication network 16.

The AV data reproducing device 104 has a function of reproducing AV data as with a conventional TV broadcasting receiver, however the AV data reproducing device 104 does not have a function of transmitting a message. Meanwhile, the sub-content reproducing device 107 has the function of transmitting a message as with a conventional mobile phone terminal, however the sub-content reproducing device 107 does not have the function of reproducing AV data. Moreover, the sub-content reproducing device 107 has a remote control function of utilizing infrared, radio wave, or the like to remotely control the AV data reproducing device 104.

In the present embodiment, the AV data is streaming data, that is, the AV data received from the broadcasting company is reproduced in real time. Moreover, the sub-content includes (i) layout designating data for designating the display layout of an application screen image, (ii) application data including the content of the application, (iii) destination data indicating a structure and destination of the message in the case in which the application is transmitted as a message, and (iv) data for specifying the AV data.

Therefore, after the sub-content reproducing device 107 receives the sub-content, the sub-content reproducing device 107 displays the application screen image based upon the sub-content, and uses the remote control function to instruct the AV data reproducing device 104 to reproduce the AV data. Thus, the AV data reproducing device 104 receives the AV data, and then displays a video of a TV program based upon the received AV data. In this way, the display based upon the sub-content and the display based upon the AV data can be carried out by separate devices.

At this point, the viewer (the user of the AV data reproducing device 104 and the sub-content reproducing device 107) inputs the content of the application and selects a submit button on a screen image, and then the sub-content reproducing device 107 creates a message in accordance with data indicating a structure of the message. The message includes: information inputted by the viewer; personal information (for example, a telephone number, etc) set up in advance in the sub-content reproducing device 107; and a channel ID and broadcasting time which are information for specifying a certain scene in a TV program. Then, the sub-content reproducing device 107 transmits the created message in accordance with data indicating the destination (the AV content related service providing device 105 in the example shown in Fig. 25) of the message.

Thus, the interactive service can be easily realized by utilizing the conventional TV broadcasting receiver and the conventional mobile phone terminal. That is, the viewer can utilize the interactive service by using the mobile phone terminal (the sub-content reproducing device 107) while watching the video on the TV broadcasting receiver (the AV data reproducing device 104).

Further, while the AV data reproducing device 104 does not require the function of reproducing the sub-content, the sub-content reproducing device 107 does not require a function of reproducing AV data. Accordingly, the functions of AV data reproducing device 104 and the sub-content reproducing device 107 are simplified. Further, by combining (i) a device, such as an already-existing TV receiver, which device can not reproduce the sub-content with (ii) a device capable of reproducing only the sub-content, an interactive service can made available.

Moreover, the sub-content of the AV content created by the AV content creating/ transmitting device 102 includes destination data indicating that the destination is the AV content related service providing device 105, so that the message from the sub-content reproducing device 107 can be received by a device desired by the broadcasting company. As a result, the broadcasting company can realize a live audience participation broadcasting program. Moreover, because the user of the sub-content reproducing device 107 needs not input the destination of the message, it is possible to cut out the need of input and prevent missending the message due to an inputting error.

The following explains in detail respective members in the interactive service system 100 of the present embodiment.

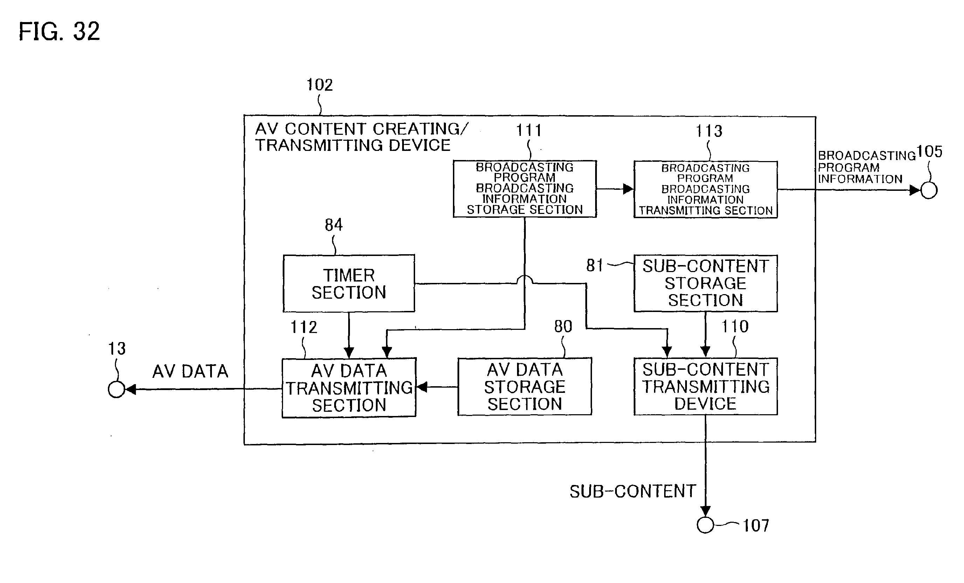

Fig. 32 shows a schematic arrangement of the AV content creating/transmitting device 102. As described above, the AV content creating/transmitting device 102 broadcasts the broadcasting program-use AV data, which is to be reproduced as a video and audio of a TV program, in a predetermined period of time though the relay station 13, and transmits the sub-content, attached to the broadcasting program-use AV data, to the sub-content reproducing device 107 through the communication network 16.

The AV content creating/transmitting device 102 of the present embodiment is identical to the AV content creating/transmitting device 72 shown in Fig. 15 except that (i) an AV data transmitting section 112 is provided instead of the AV content creating section 83 and the AV content transmitting section 85, (ii) a sub-content transmitting section 110 is newly provided, (iii) a broadcasting program broadcasting information storage section 111 is provided instead of the broadcasting program/scene ID setting section 82, and (iv) a broadcasting program broadcasting information transmitting section 113 is provided instead of the ID transmitting section 86. Note that the same reference numerals are used for the members having the same functions as the members used in the above embodiments, and further explanations thereof are omitted.

The sub-content transmitting section 110 reads out the sub-content at an appropriate timing from the sub-content storage section 81 in accordance with the time information received from the timer section 84, and then transmits the sub-content to the sub-content reproducing device 107 through the communication network 16.

The broadcasting program broadcasting storage section 11 stores a broadcast starting time and broadcast finishing time of each broadcasting program. The broadcasting program broadcasting storage section 11 includes a memory device, such as a flash memory, a HDD, or the like.

The AV data transmitting section 112 reads out desired broadcasting program-use AV data from the AV data storage section 80, and then transmits the read out broadcasting program-use AV data in accordance with broadcasting hours read out from the broadcasting program broadcasting information storage section 111 and the time information received from the timer section 84. With this, a predetermined AV data is broadcasted from the relay station 13 at a predetermined time.

The broadcasting program broadcasting information transmitting section 113 reads out broadcasting program broadcasting information from the broadcasting program broadcasting storage section 111, and then transmits the broadcasting program broadcasting information to the AV content related service providing device 105.

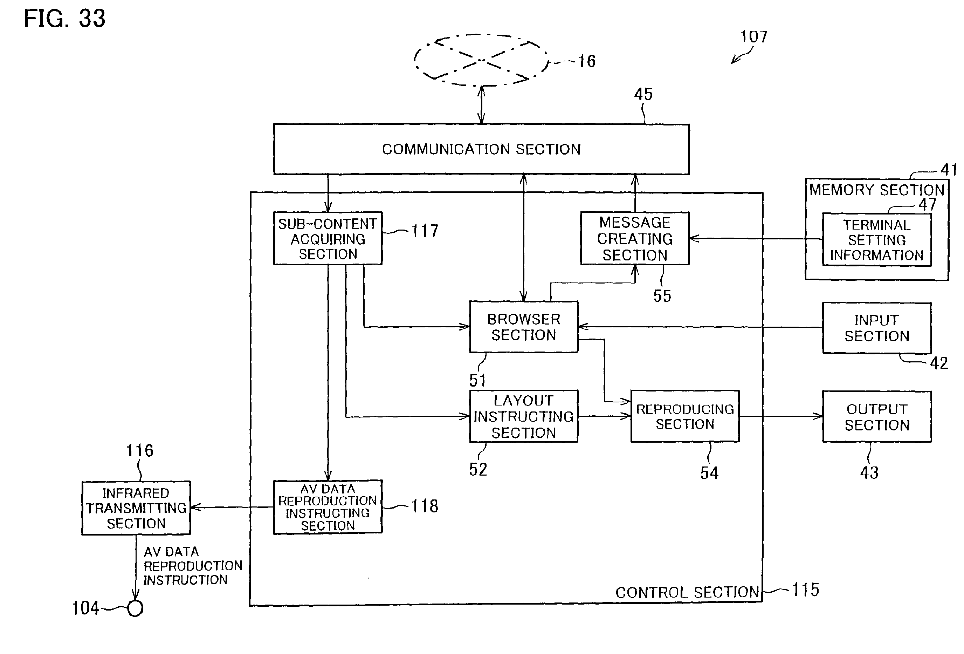

Fig. 33 shows a schematic arrangement of the sub-content reproducing device 107. The sub-content reproducing device 107 of the present embodiment is identical to the AV content reproducing device 74 (77) shown in Fig. 16 except that (i) members in the control section 115 are different, (ii) the AV content receiving section 44 and the AV content accumulating section 91 are omitted, and (iii) an infrared transmitting section 116 is added. Note that the same reference numerals are used for the members having the same functions as the members used in the above embodiments, and further explanations thereof are omitted.

The infrared transmitting section 116 transmits a remote control signal to the AV data reproducing device 104 by infrared in accordance with an instruction given from the control section 115. Note that it is possible to use radio wave instead of infrared, and also possible to use wired transmission instead of wireless transmission.

The following explains details about the control section 115. The control section 115 of the present embodiment is identical to the control section 90 of the AV content reproducing device 74 (77) shown in Fig. 16 except that (i) the sub-content acquiring section 117 is arranged differently, (ii) the timing control section 53, the AV content analyzing section 92, and the sub-content forwarding section 93 are omitted, and (iii) an AV data reproduction instructing section 118 is added. Note that the same reference numerals are used for the members having the same functions as the members used in the above embodiments, and further explanations thereof are omitted.

The sub-content acquiring section 117 acquires the sub-content from the AV content creating/transmitting device 102 through the communication network 16 and the communication section 45. Moreover, the sub-content acquiring section 117 analyzes the sub-content, and then gives various instructions to the browser section 51 and the layout instructing section 52 in accordance with an analysis result of the sub-content. Further, the sub-content acquiring section 117 transmits channel data, included in the sub-content, to the AV reproduction instructing section 118.

The AV reproduction instructing section 118 transmits an AV data reproduction instruction to the AV data reproducing device 104 through the infrared transmitting section 116 in accordance with the channel data acquired from the sub-content acquiring section 117, the AV data reproduction instruction being for instructing to reproduce the AV data of a channel indicated by the channel data. Thus, the AV data reproducing device 104 can output the video and audio in the channel designated by the sub-content.

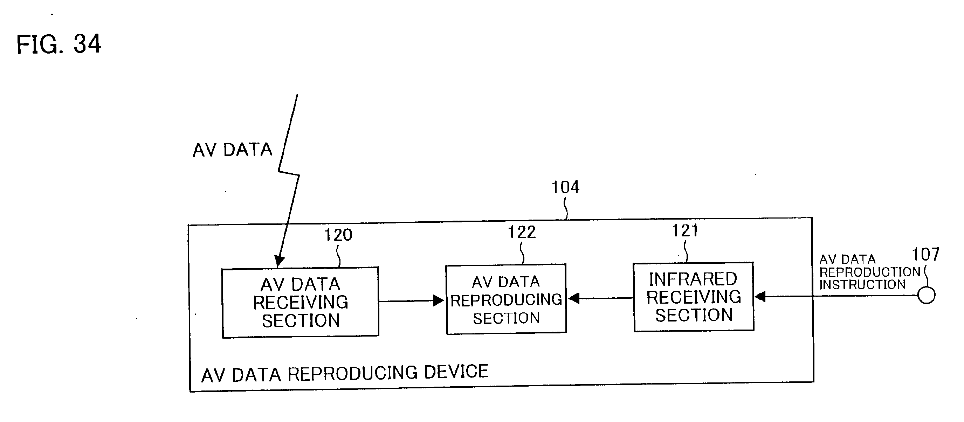

Fig. 34 shows a schematic arrangement of the AV data reproducing device 104. As shown in Fig. 34, the Av data reproducing device 104 is so arranged as to include an AV data receiving section 120, an infrared receiving section 121, and an AV data reproducing section 122.

The AV data receiving section 120 receives the AV data from the AV content creating/transmitting device 102. The AV data receiving section 120 transmits the received AV data to the AV data reproducing section 122. The infrared receiving section 121 receives the AV data reproduction instruction from the sub-content reproducing device 107 by infrared. The infrared receiving section 121 transmits the received AV data reproduction instruction to the AV data reproducing section 122.

The AV data reproducing section 122 selects a channel in accordance with the AV data reproduction instruction acquired from the sub-content reproducing device 107 through the infrared receiving section 121, and then acquires AV data of the selected channel from the AV data receiving section 120 so as to reproduce the AV data.

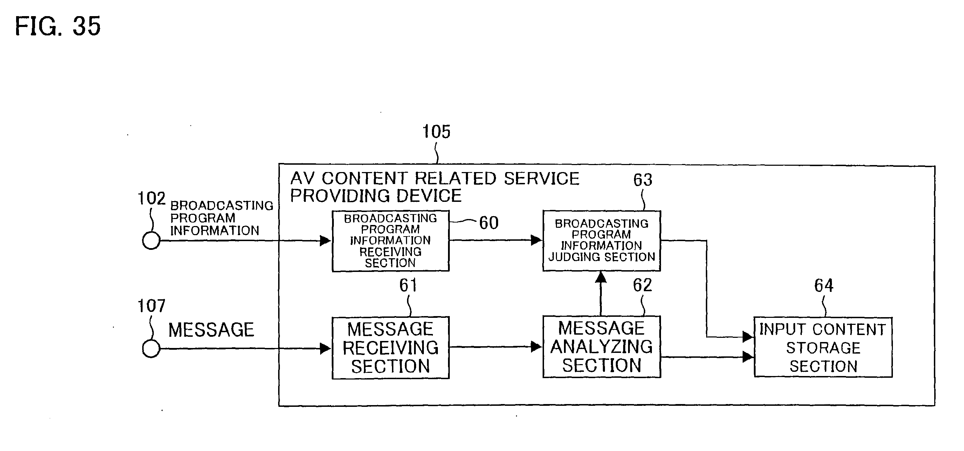

Fig. 35 shows a schematic arrangement of the AV content related service providing device 105. The AV content related service providing device 105 of the present embodiment is identical to the AV content related service providing device 15 shown in Fig. 5 except that the shop information storage section 65 and the message replying section 66 are omitted. Note that the same reference numerals are used for the members having the same functions as the members used in the above embodiments, and further explanations thereof are omitted.

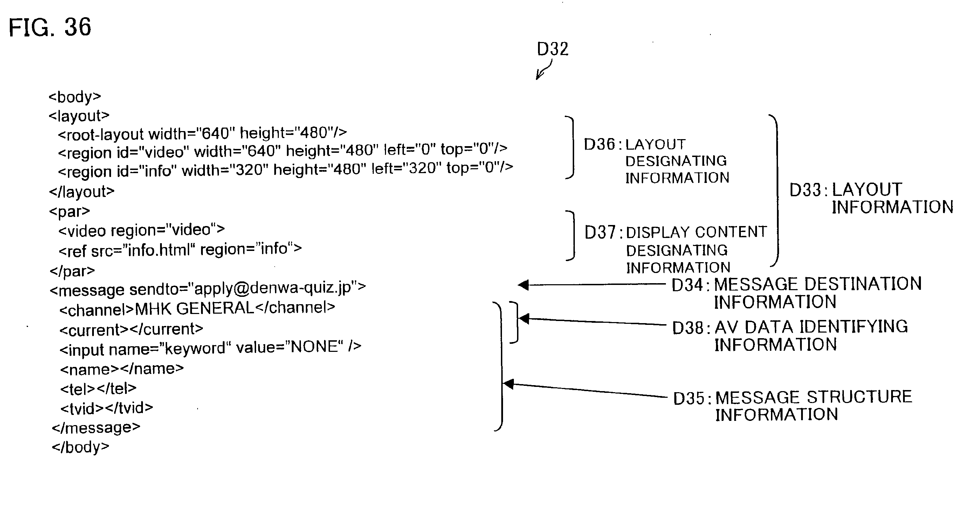

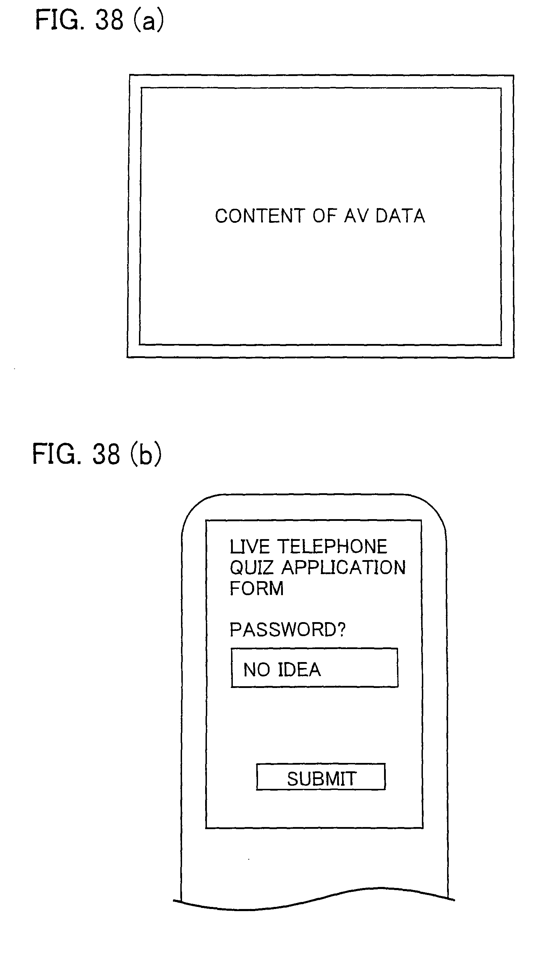

Fig. 36 shows one example of sub-content D32. Moreover, Figs. 38 show display screen images displayed based upon the sub-content D32. Note that the data structure of the sub-content D32 is similar to that of the sub-content D12 shown in Fig. 6, and further explanations thereof are omitted. Moreover, the sub-content D32 shown in Fig. 36 is written in XML as with the sub-content D12 shown in Fig. 7. However, the sub-content D32 can be written in any description format, such as HTML, XHTML or SMIL, or a combination thereof. Moreover, the example shown in Fig. 36 is simplified for an explanation of the present invention.

In the present embodiment, layout designating information D36 is written between a <layout> tag and a </layout> tag. According to examples shown in Figs. 36 and 38, an entire display region of width 640 pixels × height 480 pixels (VGA (Video Graphics Array)) is designated, and a right region of width 320 pixels is designated.

Moreover, display content designating information D37 is written between a <par> tag and a </par> tag. According to the examples shown in Figs. 36 and 38, a video based upon the AV data is displayed on the entire display region of the screen, and the content of an HTML document "info. html" is displayed in the right region of the screen, the content being superimposed on the video. Note that the HTML document "info. html" is included in the sub-content D32.

Note that the AV data reproducing device 104 does not have a function of reproducing sub-content in the present embodiment. Therefore, the video based upon the AV data is displayed on the entire display region of the screen in accordance with the display content designating information D37. Moreover, the sub-content reproducing device 107 does not have a function of reproducing AV data. Therefore, a display based upon the HTML document "info. html" is carried out on the right region (the entire display region of the mobile phone terminal) of the screen in accordance with the display content designating information D37.

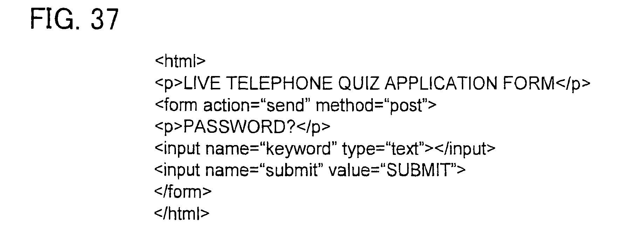

Fig. 37 shows one example of the HTML document "info. html". As shown in Fig. 37, an input request for a password and an operation in the case of selecting a "SUBMIT" button are written in the "info. html". In the case of selecting the "SUBMIT" button, a message is created, and then transmitted to the AV content related service providing device 105.

In Fig. 36, message destination information D34 is written inside a <message> tag, and message structure information D35 is written between the <message> tag and a </message> tag. In the present embodiment, information between the <message> tag and the </message> tag is a model form of a message.

In the example shown in Fig. 36, an e-mail address of the AV content related service providing device 105 is written inside the <message> tag as the message destination information D34. Moreover, a <channel> tag, a </channel> tag, a <current> tag, a </current> tag, an <input> tag, a <name> tag, a </name> tag, a <tel> tag, a </tel> tag, a <tvid> tag, and a </tvid> tag are written between the <message> tag and the </message> tag.

Note that the <channel> tag and </channel> tag are similar to the <channel> tag and </channel> tag shown in Fig. 7, and further explanations thereof are omitted. Moreover, the <input> tag, the <name> tag, the </name> tag, the <tvid> tag, and the </tvid> tag are similar to those shown in Fig. 19, and further explanations thereof are omitted. Note that information between the <channel> tag and the < / channel> tag is different from information between the <channel> tag and the </channel> tag shown in Fig. 7, and is written in advance by the AV content creating/ transmitting device 102.

Current time information indicating current time is written between the <current> tag and the </current> tag. A telephone number of the sub-content reproducing device 107 (mobile phone terminal) is written between the <tel> tag and the </tel> tag. Note that the information between the <tel> tag and the </tel> tag is written when creating a message.

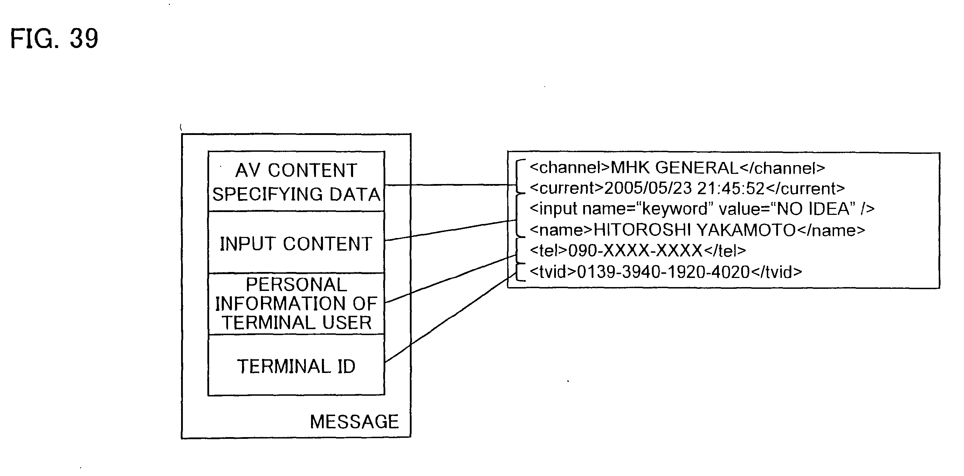

Fig. 39 shows a structure of a message created by the message creating section 55 of the sub-content reproducing device 107, and one example of the message. As shown in Fig. 39, channel information is written between a <channel> tag and a </channel> tag as AV content specifying data D38, and current time information is written between a <current> tag and a </current> tag. Moreover, a password is written inside an <input> tag as an input content. Moreover, the name of a viewer is written between a <name> tag and a </name> tag as the personal information of a terminal user, and a telephone number of the viewer is written between a <tel> tag and a </tel> tag. Then, a terminal ID is written between a <tvid> tag and a </tvid> tag.

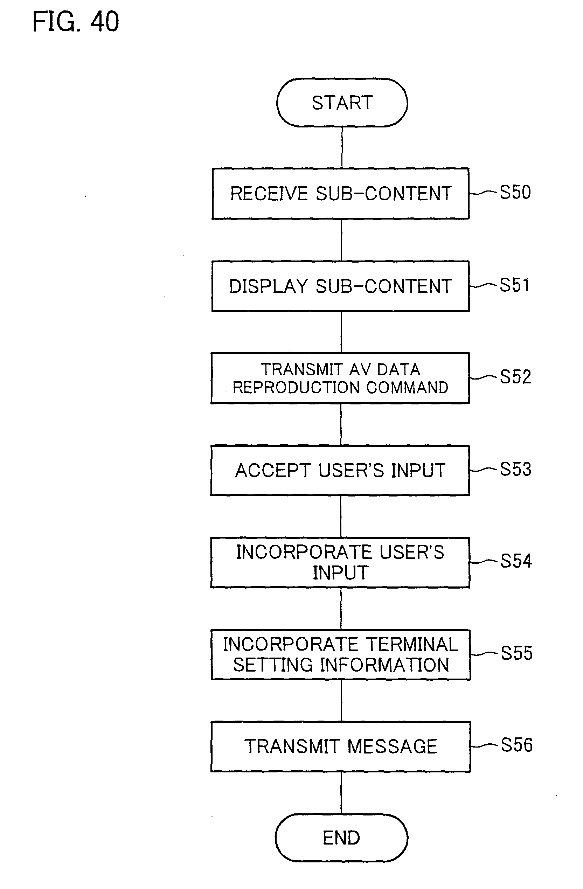

Fig. 40 shows processing operations carried out by the sub-content reproducing device 107. As shown in Fig. 40, first, the control section 115 receives sub-content from the AV content creating/transmitting device 102 (S50), analyzes the sub-content to carry out a layout and display of the sub-content (S51), and transmits an AV data reproduction command (instruction) to the AV data reproducing device 104 (S52) so that the AV data reproducing device 104 reproduces the AV data of a channel written in the sub-content.

Next, the control section 115 accepts a user's input (S53), the user's input (password) is incorporated into the model form of the message (S54), the terminal setting information is also incorporated (S55) to create the message, and then the created message is transmitted (S56). After that, the process is terminated.

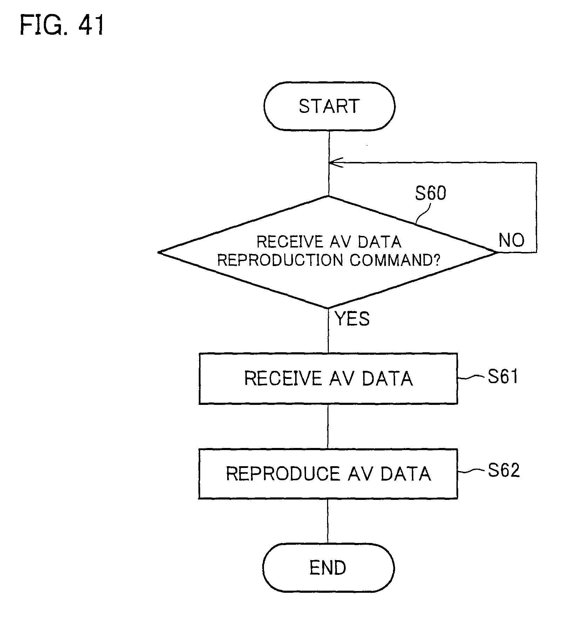

Fig. 41 shows processing operations carried out by the AV data reproducing device 104. As shown in Fig. 41, first, the AV data reproducing device 104 stands by until a reception of the AV data reproduction command given from the sub-content reproducing device 107 (S60). After the reception of the AV data reproduction command, the AV data reproducing device 104 receives the AV data (S61), so as to reproduce the AV data (S62). After the reproduction is completed, the processing operations are terminated.

### (Embodiment 4)

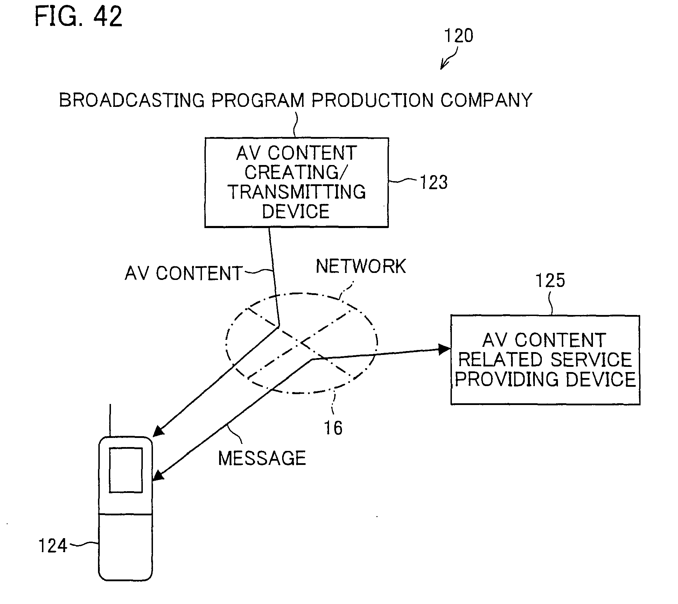

The following explains yet another embodiment of the present invention in reference to Figs. 42 to 45. Fig. 42 shows a schematic arrangement of an interactive service system of the present embodiment. An interactive service system 120 provides a service which allows a user to obtain information concerning a matter in which the user is interested when watching a video clip of a drama by using a mobile phone. Note that the same reference numerals are used for the members having the same functions as the members used in the above embodiments and for the same processing operations as the processing operations explained in the above embodiments, and further explanations thereof are omitted.

As shown in Fig. 42, the interactive service system 120 is arranged so that an AV content creating/transmitting device 123, an AV content reproducing device 124, and an AV content related service providing section 125 are communicably connected with each other through the communication network 16. Unlike the above embodiments, the AV content creating/transmitting device 123 transmits AV content to the AV content reproducing device 124 through the communication network 16 in the present embodiment.

In the present embodiment, a broadcasting program production company owns the AV content creating/transmitting device 123, and a viewer owns the AV content reproducing device 124. Moreover, the AV content reproducing device 124 is a mobile phone terminal in an example shown in Fig. 42.

The AV content creating/transmitting device 123 creates AV content, and then transmits the AV content in response to a request from the AV content reproducing device 124.

In the present embodiment, the AV data is the video clip which is data received from the broadcasting program production company. Moreover, the sub-content includes (i) layout designating data for designating the display layout which switches between a main screen image for displaying a video and a question screen image, (ii) destination data indicating a structure and destination of a message transmitted from the AV content reproducing device 124 to the AV content related service providing device 125, and (iii) data for specifying the AV data.

In the present embodiment, after the AV content reproducing device 124 receives the AV content from the AV content creating/transmitting device 123, the AV content reproducing device 124 displays either the main screen image or the question screen image in accordance with the designated display layout. Then, the displayed screen image is switched to another in accordance with a user's operation.

Here, in the case in which the viewer (the user of the AV content reproducing device 124) selects a question button on the question screen image, the AV content reproducing device 124 creates a message in accordance with data indicating a structure of the message. The message includes personal information (for example, an address, a name, etc.) and an e-mail address set in advance in the AV content reproducing device 124, and information for specifying a broadcasting program. In the present embodiment, an identifier (for example, a file name) of the AV data and a time elapsed after the start of the reproduction are utilized as the information for specifying the broadcasting program. Then, the AV content reproducing device 124 selects any one of a plurality of destinations designated in the sub-content, and then transmits the message to the selected destination.

The AV content related service providing device 125 accumulates information in accordance with the message received from the AV content reproducing device 124.

Therefore, even in the case in which the AV content is transmitted through not the relay station 13 but the communication network 16, it is possible to use the interactive service based upon the sub-content.

Moreover, the sub-content of the AV content created by the AV content creating/transmitting device 123 includes a plurality of sets of destination data indicating that the destination is the AV content related service providing device 125, and the message is transmitted to any one of the destinations in accordance with a selection made by the user of the AV content reproducing device 124, so that the broadcasting program production company can causes a desired device to receive the message from the AV content reproducing device 124. Moreover, the user of the sub-content reproducing device 107 only has to select the destination of the message, and needs not input the destination of the message. Therefore, it is possible to cut out the need of input and prevent missending the message due to an inputting error.

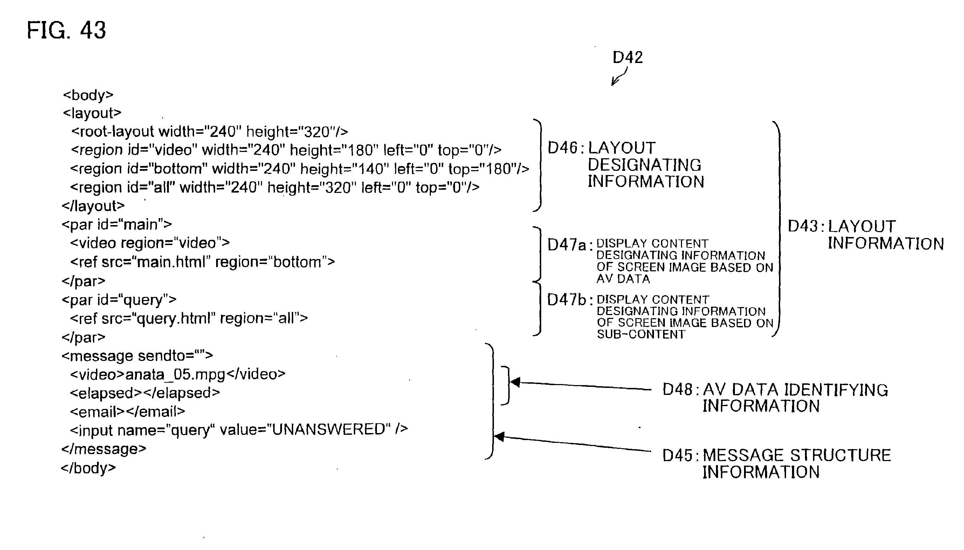

Fig. 43 shows one example of sub-content D42. Note that layout designating information D46 and display content designating information D47a of the main screen image, which information are included in the sub-content D42, are similar to the layout designating information D16 and the display content designating information D17a of the main screen image which information are shown in Fig. 7, and further explanations thereof are omitted. Note that the sub-content D42 in Fig. 43 is written in XML, however the sub-content D42 can be written in any description format, such as HTML, XHTML or SMIL, or a combination thereof. Moreover, the example shown in Fig. 43 is simplified for an explanation of the present invention.

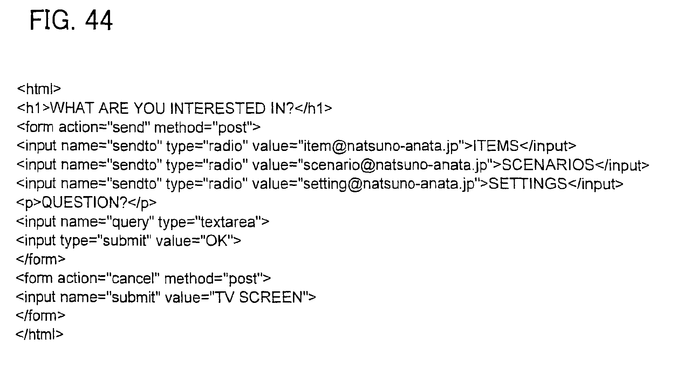

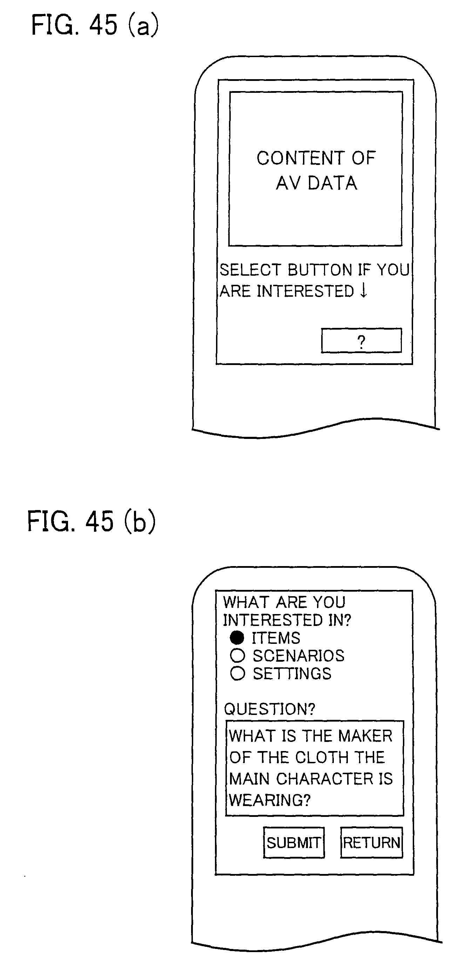

On the question screen image, the content of an HTML document "query. html" is displayed entirely. Fig. 44 shows one example of the HTML document "query. html", and Fig. 45(b) shows one example of the main screen image displayed based upon display content designating information D47b of the question screen image. As shown in Fig. 45(b), on the question screen image, (i) choices of factors in a scene, (ii) the input of a question, (iii) a "SUBMIT" button for submitting the question, and (iv) a "RETURN" button for returning to the main screen image are displayed. In the present embodiment, the destination of the message changes in response to the above selection. Note that the HTML document "query. html" is included in the sub-content D42.

In Fig. 43, message destination information D44 is written inside a <message> tag, and message structure information D45 is written between the <message> tag and a </message> tag. In the present embodiment, information between the <message> tag and the </message> tag is a model form of a message. Note that the message destination information D44 is written in accordance with the above selection when creating the message.

In an example shown in Fig. 43, a <video> tag, a </video> tag, an <elapsed> tag, an </elapsed> tag, an <email> tag, an </email> tag, and an <input> tag are written between the <message> tag and the </message> tag. Note that information are written between or inside those tags when creating a message, except for between the <video> tag and the </video> tag.

The file name that is the identifier of the video clip is written in advance between the <video> tag and the </video> tag. Moreover, elapsed time information that is the time elapsed after the start of the reproduction of the video clip is written between the <elapsed> tag and the </elapsed> tag. The file name and the elapsed time information become information D48 for specifying the AV data.

Moreover, an e-mail address is written between the <email> tag and the </email> tag as the message sender information. The content of the question is written by text data inside the <input> tag. Note that in the case in which the question is not inputted, "UNANSWERED" is written inside the <input> tag.

### [Embodiment 5]

The following explains still another embodiment of the present invention. As compared with the interactive service system 10 shown in Figs. 1 to 13, the AV content related service providing device in an interactive service system of the present embodiment can specify the service to be provided in accordance with the destination of the message. Note that the same reference numerals are used for the members having the same functions as the members used in the above embodiments and for the same processing operations as the processing operations explained in the above embodiments, and further explanations thereof are omitted.

In this case, since the AV content related service providing device 15 can specify the CM (AV content) in accordance with the destination of the message, it is not necessary to utilize the broadcasting program information in order to specify the CM. Therefore, it is possible for the AV content combining/transmitting device 12 to omit a transmission of the broadcasting program information with respect to the AV content related service providing device 15. Therefore, the broadcasting program information creating section 35 and the broadcasting program information transmitting section 36 can be omitted from the AV content combining/ transmitting device 12. Moreover, the broadcasting program information receiving section 60, the broadcasting program information judging section 63 and the broadcasting program information storage section 67 can be omitted from the AV content related service providing device 15 shown in Fig. 5.

As a result, the interactive service system of the present embodiment can be arranged simpler than the interactive service system shown in Figs. 1 to 13.

The present invention is not limited to the embodiments above, but may be altered within the scope of the claims. An embodiment based upon a proper combination of technical means disclosed in different embodiments is encompassed in the technical scope of the present invention.

For example, the AV data is used as content included in the multimedia content in the above embodiments, however it is possible to use various content, such as image data, video data, audio data, document data, etc.

Moreover, the personal information of the user, such as a name, a telephone number, etc., is transmitted from the AV content reproducing device directly to the AV data related service providing device. However, for example, the personal information can be transmitted in the following manner.

That is, first, a correspondence of a terminal ID to the personal information of a viewer is stored in advance in the AV content creating/ transmitting device when making a channel contract with a broadcasting company. Next, the AV content reproducing device transmits to the AV content related service providing device a message in which the personal information is omitted but the terminal ID is included. Then, the AV content related service providing device inquires of the AV content creating/transmitting device about personal information corresponding to the terminal ID included in the received message, and acquires the personal information. Thus, the AV content reproducing device can omit the personal information of the viewer from the message, so that the security improves.

Moreover, the present invention can be arranged as follows.

That is, in order to solve the above problems, an interactive service system of the present invention is an interactive service system in which (i) a service provider transmits to a service requestor multimedia content including content and sub-content attached to the content, and (ii) the service requestor transmits to the service provider a message with respect to the multimedia content, the service provider includes: a multimedia content transmitting device for transmitting the multimedia content; and a message receiving device for receiving the message, the service requestor includes: a multimedia content reproducing device for reproducing the multimedia content received from the multimedia content transmitting device; and a message transmitting device for creating the message in accordance with the sub-content of the multimedia content to transmit the message, the sub-content of the multimedia content transmitted from the multimedia content transmitting device includes destination data which indicates a destination of the message, and the message transmitting device transmits the message in accordance with the destination data included in the sub-content.

According to the above arrangement, the sub-content of the multimedia content transmitted from the service provider includes the destination data indicating the destination of the message, and the service requestor transmits the message in accordance with the destination data included in the sub-content. With this, the message can be surely transmitted to a destination desired by the service provider. Therefore, in addition to a server which provides the interactive service, the message can be transmitted to a server of a broadcasting company, a CM production company, or the like.

Note that devices of the service provider can be integral with each other, and devices of the service requestor can also be integral with each other. Moreover, it is desirable that the message be transmitted by utilizing an e-mail system or a data transmission system similar to the e-mail system. In this case, it is possible to use an existing system, and adding a mail address to the message is only required. Therefore, it is possible to transmit the message easily.

Moreover, the multimedia content transmitting device can transmit the content and sub-content, included in the multimedia content, to the content reproducing device through separate communication paths.

Moreover, the multimedia content reproducing device can be divided into a content reproducing device for reproducing the content of the multimedia content and a sub-content reproducing device for reproducing the sub-content of the multimedia content. In this case, the sub-content reproducing device and the message transmitting device can be integral with each other. Further, the multimedia content transmitting device can transmit the content and sub-content, included in the multimedia content, to the content reproducing device and the sub-content reproducing device through separate communication paths.

In the interactive service system of the present invention, and in the above arrangement, it is preferable that (i) the sub-content of the multimedia content transmitted from the multimedia content transmitting device include in advance data identifying information for identifying a type of data included in the message and (ii) data included in the message transmitted from the message transmitting device be caused to correspond to the data identifying information. In this case, it is possible to specify the type of data in accordance with the data identifying information even in the case in which data are arranged disorderly. Therefore, it is possible to read out a desired type of data.

In the interactive service system of the present invention, and in the above arrangement, it is preferable that the message transmitting device add, to the message, information for specifying at least one of the message transmitting device and a user of the message transmitting device. In this case, because it is unnecessary that the user of the message transmitting device instruct an addition of the above information to the message, the user is free from an onerous task.

Incidentally, it is preferable to add information to the message, the information for specifying time when the content is reproduced, such as a case in which the content is streaming data that is the received data reproduced in real time.

Here, in the interactive service system of the present invention, and in the above arrangement, it is preferable that the multimedia content reproducing device include switching means for switching between a reproduction of the content and a reproduction of the sub-content. Further, it is preferable that the message transmitting device add, to the message, information which causes the service provider to specify the content. Here, the information which causes the service provider to specify the content is exemplified by information relating to time when the switching means of the multimedia content reproducing device switches from the reproduction of the content to the reproduction of the sub-content.

Moreover, in the interactive service system of the present invention, and in the above arrangement, it is preferable that (i) the content be AV data of a broadcasting program of a predetermined channel and (ii) the message transmitting device add, to the message, information of the channel and information relating to time when the broadcasting program is broadcasted.

Moreover, in the interactive service system of the present invention, and in the above arrangement, it is preferable that (i) the content be transmitted in the form of a file and (ii) the message transmitting device add, to the message, an identifier of the file and a time elapsed after a start time of a reproduction of the content.

Note that a multimedia content transmitting device can achieves effects similar to the above as long as the multimedia content transmitting device can be utilized in the interactive service system. Moreover, a message transmitting device can achieve effects similar to the above as long as the message transmitting device can be utilized in the interactive service system.

To solve the above mentioned problems, a data structure of the present invention is a data structure of sub-content attached to content, including structure data which indicates a structure of a message with respect to multimedia content including the content and sub-content; and destination data which indicates a destination of the message.

According to the above arrangement, the sub-content of the multimedia content includes the destination data which indicates the destination of the message with respect to the multimedia content. In the case of creating and transmitting the message at a reproducing end for reproducing the multimedia content, the message is transmitted in accordance with the destination data. Therefore, the message can be transmitted to a destination desired by the creating end for creating the multimedia content.

Note that the destination data may correspond to the content. In this case, the destination of the message can be changed for each content. As a result, it is possible to specify the content from the destination of the message.

Further, it is preferable that the structure data include data identifying information for identifying a type of data included in the message. In this case, even in the case in which data in the message are arranged disorderly, it is possible to specify the type of data from the data identifying information. Therefore, it is unnecessary to rearrange the data in the message when creating the message at a transmitting end for transmitting the message. Moreover, a receiving end for receiving the message can read out a desired type of data.

Moreover, it is preferable that which content the message is for. On this account, it is preferable that the data structure of the present invention further include content identifying information utilized for identifying the content.

Lastly, each block of the AV content creating device 11, the AV content combining/transmitting device 12, the reproducing devices 14, 74, 77, 104, 107 and 124, the AV content related service providing devices 15, 75, 105 and 125, and the AV content creating/transmitting devices 72, 102 and 123, especially the control section of the reproducing device, may include a hardware logic, or may be realized by a software using a CPU as described below.

That is, the above device includes: a CPU (central processing unit) which executes a command of a control program for realizing each function; a ROM (read only memory) which stores the control program; a RAM (random access memory) which loads the control program; a memory device (recording medium) which stores the control program and various data; and the like. Then, an object of the present invention can be achieved by supplying a computer-readable recording medium to the above device and then causing its computer (CPU, MPU, or the like) to read out and execute a program code recorded in the recording medium. Note that the computer-readable recording medium records the program code (executable format program, intermediate code program, source program) of the control program of the above device, the control program being software that realizes the above-described functions.

The recording medium is exemplified by (i) a tape, such as a magnetic tape or a cassette tape, (ii) a disc, such as a magnetic disc (a floppy^{®} disc, a hard disc, etc.) or an optical disc (a CD-ROM, an MO, an MD, a DVD, a CD-R, etc.), (iii) a card, such as an IC card (including a memory card) or an optical card, (iv) a semiconductor memory, such as a mask ROM, an EPROM, an EEPROM, a flash ROM, etc.

Moreover, by arranging the above device to be connectable with a communication network, the program code may be supplied through the communication network. The communication network is not especially limited, and may be, for example, the Internet, an intranet, an extranet, a LAN, an ISDN, a VAN, a CATV communication network, a virtual private network, a telephone network, a mobile communication network, a satellite communication network, or the like. Moreover, a transmission medium constituting the communication network is not especially limited, and may be (i) a fixed line, such as an IEEE1394, a USB, a power line carrier, a cable TV circuit, a telephone line or an ADSL, or (ii) a wireless, such as an infrared (an IrDA, a remote control), a Bluetooth^{®}, an 802.11 wireless, an HDR, a mobile phone network, a satellite circuit or a ground wave digital network. Note that the present invention can be realized even in the case in which the program code is realized by an electronic transmission and in the form of a computer data signal embedded in a carrier wave.

### INDUSTRIAL APPLICABILITY

An interactive service system of the present invention is preferably applicable to a TV receiver and a mobile phone terminal as a multimedia content reproducing device and a message transmitting device, and is also applicable to other information communication terminals, such as a PDA, a PC, etc.

## Claims

1. An interactive service system in which (i) a service provider transmits, to a service requestor, multimedia content including content and sub-content attached to the content, and (ii) the service requestor transmits, to the service provider, a message with respect to the multimedia content,
the service provider transmitting, to the service requestor, the content and sub-content included in the multimedia content via separate communication paths, and
the service requestor transmitting the message according to destination data which is provided in the service requestor.

2. An interactive service system in which (i) a service provider transmits, to a service requestor, multimedia content including content and sub-content attached to the content, and (ii) the service requestor transmits, to the service provider, a message with respect to the multimedia content,
the service provider transmitting, to the service requestor, the content and sub-content included in the multimedia content via a single communication path, and
the service requestor transmitting the message according to the destination data which is provided in the service requestor.

3. The system as set forth in claim 2, wherein
the content and sub-content are transmitted to the service requestor in an asynchronous manner.

4. The system as set forth in any one of claims 1 to 3, wherein:
the sub-content of the multimedia content includes the destination data which indicates a destination of the message.

5. A multimedia content transmitting device comprising:
transmitting means for transmitting multimedia content including content and sub-content attached to the content,
wherein the transmitting means transmits the content and sub-content included in the multimedia content via separate communication paths respectively.

6. A multimedia content transmitting device comprising:
transmitting means for transmitting multimedia content including content and sub-content attached to the content,
wherein the transmitting means transmits the content and sub-content included in the multimedia content via a single communication path.

7. The device as set forth in claim 6, wherein the content and sub-content is transmitted in an asynchronous manner.

8. The device as set forth in any one of claims 5 to 7, wherein the sub-content includes destination data indicating destination of message with respect to the multimedia content.

9. The device as set forth in claim 8, wherein the destination data corresponds to the content.

10. The device as set forth in any one of claims 5 to 7, wherein the sub-content further includes structure data which indicates a structure of the message to be created at a reproducing end for reproducing the multimedia content.

11. A multimedia content receiving device, comprising:
receiving means for receiving multimedia content including content and sub-content attached to the content,
wherein the receiving means receives the content and sub-content included in the multimedia content via separate communication paths respectively.

12. A multimedia content receiving device, comprising:
receiving means for receiving multimedia content including content and sub-content attached to the content,
wherein the receiving means receives the content and sub-content included in the multimedia content via a single communication path.

13. The device as set forth in claim 12, wherein the content and the sub-content are received in an asynchronous manner.

14. A multimedia content receiving device, comprising:
receiving means for receiving multimedia content including content and sub-content attached to the content,
wherein the receiving means receives the sub-content which is (i) broadcasted or (ii) transmitted irrespective of a request from the multimedia content receiving device.

15. The device as set forth in any one of claims 11 to 14, further comprising sub-content reproducing means for reproducing the sub-content received by the receiving means.

16. The device as set forth in claim 15, further comprising content reproducing means for reproducing the content received by the receiving means.

17. The device as set forth in any one of claims 11 to 16, further comprising
creating means for creating a message with respect to the multimedia content; and
transmitting means for transmitting the created message,
wherein the transmitting means transmits the message to a destination indicated by destination data provided in the multimedia content receiving device.

18. The device as set forth in claim 17, wherein the destination data is included in the sub-content received by the receiving means.

19. The device as set forth in claim 17 or 18, wherein the creating means creates the message based on a message structure indicated by structure data included in the sub-content received by the receiving means.

20. An interactive service system in which (i) a service provider transmits, to a service requestor, multimedia content including content and sub-content attached to the content, and (ii) the service requestor transmits, to the service provider, a message with respect to the multimedia content,
the service provider including the multimedia content transmitting device as set forth in any one of claims 5 to 10 for transmitting the multimedia content,
the service requestor including the multimedia content receiving device as set forth in any one of claims 17 to 19 for receiving the multimedia content, and
the service provider further including a message receiving device for receiving the message from the multimedia content receiving device.

21. A method of controlling a multimedia content transmitting device for transmitting multimedia content including content and sub-content attached to the content, the method comprising the step of:
transmitting the content and sub-content included in the multimedia content via separate communication paths respectively, or via a single communication path.

22. A method of controlling a multimedia content receiving device for receiving multimedia content including content and sub-content attached to the content, the method comprising the step of:
receiving the content and sub-content included in the multimedia content via separate communication paths respectively, or via a single communication path.

23. A method of controlling an interactive service system in which (i) a service provider transmits, to a service requestor, multimedia content including content and sub-content attached to the content, and (ii) the service requestor transmits, to the service provider, a message with respect to the multimedia content, the service provider including a multimedia content transmitting device for transmitting the multimedia content, the service requestor including the multimedia content receiving device for receiving the multimedia content, and the service provider further including a message receiving device for receiving the message from the multimedia content receiving device,
the method comprising the steps of:
the multimedia content transmitting device transmitting, to the multimedia content receiving device, the content and sub-content included in the multimedia content via separate communication paths respectively, or via a single communication path; and
the multimedia content receiving device transmitting the message according to destination data provided in the service requestor.

24. A program for controlling a multimedia content transmitting device, which program causes a computer to execute each step of the method as set forth in claim 21 for controlling a multimedia content transmitting device.

25. A program for controlling a multimedia content receiving device, which program causes a computer to execute each step of the method as set forth in claim 22 for controlling the multimedia content receiving device.

26. A program for controlling an interactive service system, which program causes a computer to execute each step of the method as set forth in claim 23 for controlling an interactive service system.

27. A computer-readable storage medium storing at least one of the program as set forth in claim 24, the program as set forth in claim 25, and the program as set forth in claim 26.
